# EUROPEAN PATENT APPLICATION

(11) **EP 2 330 820 A1**
(43) Date of publication of application: **08.06.2011**
(21) Application number: 09812823.4
(22) Date of filing: 14.07.2009
(51) Int. Cl.: H04N 7/173, G06F 13/00, G06F 21/00, G06F 21/24

(54) **CONTENT DISTRIBUTION SYSTEM**

(30) Priority: 10.09.2008 JP 2008231761
(71) Applicant: NEC Corporation, Minato-ku Tokyo 108-8001 (JP)
(72) Inventor: SATODA, Kozo, Tokyo 108-8001 (JP); NOGAMI, Kousuke, Tokyo 108-8001 (JP)
(74) Representative: Betten & Resch
(86) International application number: PCT/JP2009/003286
(87) International publication number: WO 2010/029674

(57) **Abstract**

This system 1 includes user equipment 2, an application server system (AP system) 4, and a connection control system 3. The user equipment 2 transmits equipment specification information having been stored in advance to the connection control system 3. The connection control system 3 establishes a connection based on the AP system 4 and the user equipment 2 based on the received equipment specification information. The AP system 4 transmits content data to the user equipment 2 that connection is established. The user equipment 2 transmits user identification information for identifying a user and a content storing process request to the AP system 4 via the connection control system 3. The AP system 4 causes a storing device to store the received user identification information and content data specified with the received content storing process request in association with each other.

## Description

### TECHNICAL FIELD

The present invention relates to a content delivery system that transmits content data representing content to user equipment.

### BACKGROUND ART

A content delivery system that broadcasts content (such as a moving image, i.e., a TV program) by transmitting content data representing the content to user equipment via an IP (Internet Protocol) network is known.

A system described in Patent Document 1 as one of the content delivery systems of this type is provided with a storing device that stores content data. This content delivery system causes the storing device to store content data in response to a request transmitted by user equipment. Moreover, the content delivery system transmits stored content data to user equipment in response to a request transmitted by the user equipment. Consequently, the user equipment outputs content represented by the received content data. As a result, a user can view the content having been broadcasted in the past.

[Patent. Document 1] Japanese Unexamined Patent Application Publication No. JP-A 2008-147759

There is a case that one piece of user equipment is used by a plurality of users. In this case, one of the users may want other users not to view content represented by content data stored by the user's own request.

However, the abovementioned content delivery system transmits the stored content data when receiving a request from the user equipment even though any user is actually using the user equipment. That is to say, the abovementioned content delivery system has a problem that it is impossible to prevent content represented by content data stored by a request transmitted by one user from being viewed by other users.

### SUMMARY

Accordingly, an object of the present invention is to provide a content delivery system capable of solving the aforementioned problem, "it is impossible to prevent content represented by content data stored in accordance with a request transmitted by one user from being viewed by other users."

In order to achieve the object, a content delivery system of an exemplary embodiment of the present invention includes user equipment, an application server system, and a connection control system. The user equipment is configured to transmit equipment specification information as previously stored information for specifying equipment, to the connection control system. The connection control system is configured to receive the equipment specification information transmitted by the user equipment and establish a connection between the application server system and the user equipment based on the received equipment specification information. The application server system is configured to transmit content data representing content to the user equipment with the connection established by the connection control system.

The user equipment is configured to further transmit user identification information as information for identifying a user of the user equipment, and a content storing process request that includes content specification information for specifying the content and that is a process request of requesting the application server system to execute a process for storing content data representing the content, to the connection control system. The connection control system is configured to further receive the user identification information and the content storing process request transmitted by the user equipment, and transmit the received user identification information and the received content storing process request to the application server system. The application server system is configured to further receive the user identification information and the content storing process request transmitted by the connection control system, and execute a process of causing a storing device to store the received user identification information and content data representing content specified by the received content storing process request in association with each other.

Further, a content delivery system of another exemplary embodiment of the present invention includes user equipment, an application server system, and a connection control system, The user equipment is configured to transmit equipment specification information as previously stored information for specifying equipment to the connection control system. The connection control system, includes a Core IMS (Internet Protocol Multimedia Subsystem) part configured to receive the equipment specification information transmitted by the user equipment and establish a connection between the application server system and the user equipment based on the received equipment specification information. The application server system includes: a media functions part configured to transmit content data representing content to the user equipment with the connection established by the connection control system; a service control functions part configured to control a service provided by the media functions part; and a user profile server functions part configured to store profile information of a user of the user equipment.

The user equipment is configured to further transmit user identification information as information for identifying the user of the user equipment, and a content storing process request that includes content specification information for specifying the content and that is a process request of requesting the application server system to execute a process for storing content data representing the content, to the Core IMS part. The Core IMS part is configured to further receive the user identification information and the content storing process request transmitted by the user equipment, and transmit the user identification information and the content storing process request having been received to the application server system. The application server system is configured to receive the user identification information and the content storing process request transmitted by the Core IMS part. The media functions part is configured to store the content data. The service control functions part is configured to execute a process of causing the user profile server functions part to store the received user identification information, and content data identification information for identifying the content data representing the content specified by the received content storing process request among the content data stored by the media functions part, in association with each other.

Further, a content delivery method of another exemplary embodiment of the present invention includes: transmitting equipment specification information as previously stored information for specifying equipment to a connection control system, by user equipment; receiving the equipment specification information transmitted by the user equipment and establishing a connection between an application server system and the user equipment based on the received equipment specification information, by the connection control system; transmitting content data representing content to the user equipment with the connection established by the connection control system, by the application server system; further transmitting user identification information as information for identifying a user of the user equipment, and a content storing process request that includes content specification information for specifying the content and that is a process request of requesting the application server system to execute a process for storing content data representing the content, to the connection control system, by the user equipment; further receiving the user identification information and the content storing process request transmitted by the user equipment, and transmitting the received user identification information and the received content storing process request to the application server system, by the connection control system; and further receiving the user identification information and the content storing process request transmitted by the connection control system, and causing a storing device to store the received user identification information and content data representing the content specified by the received content storing process request in association with each other, by the application server system.

Further, an application server system of another exemplary embodiment of the present invention includes: a content delivering means configured to, when a connection with user equipment is established by a connection control system, transmit content data representing content to the user equipment; and a content storing processing means configured to receive user identification information for identifying a user of the user equipment, and a content storing process request that includes content specification information for specifying the content and that is a process request of requesting for a process for storing content data representing the content, from the user equipment via the connection control system, and execute a process of causing a storing device to store the received user identification information and content data representing the content specified by the received content storing process request in association with each other.

Further, a computer program of another exemplary embodiment of the present invention includes instructions for causing an application server system to realize: a content delivering means configured to, when a connection with user equipment is established by a connection control system, transmit content data representing content to the user equipment; and a content storing processing means configured to receive user identification information for identifying a user of the user equipment, and a content storing process request that includes content specification information for specifying the content and that is a process request of requesting for a process for storing content data representing the content, from the user equipment via the connection control system, and execute a process of causing a storing device to store the received user identification information in association with content data representing content specified by the received content storing process request.

With the configurations as described above, the present invention can prevent content represented by content data stored by a request stored by one user from being viewed by other users.

### BRIEF DESCRIPTION OF THE DRAWINGS

Fig. 1 is a diagram showing a schematic configuration of a content delivery system according to a first exemplary embodiment of the present invention;
Fig. 2 is a block diagram schematically showing a function of the content delivery system shown in Fig. 1;
Fig. 3 is a sequence diagram showing an operation of the content delivery system shown in Fig. 1 when authenticating user equipment and a user of the user equipment;
Fig. 4 is a sequence diagram showing an operation of the content delivery system shown in Fig. 1 when registering schedule information in accordance with an input by the user of the user equipment;
Fig. 5 is a sequence diagram showing an operation of the content delivery system shown in Fig. 1 when acquiring a list of schedule information in accordance with an input by the user of the user equipment;
Fig. 6 is a sequence diagram showing an operation of the content delivery system shown in Fig. 1 when editing schedule information in accordance with an input by the user of the user equipment;
Fig. 7 is a sequence diagram showing an operation of the content delivery system shown in Fig. 1 when recording content based on schedule information;
Fig. 8 is a sequence diagram showing an operation of the content delivery system shown in Fig. 1 when stopping recording content;
Fig. 9 is a sequence diagram showing an operation of the content delivery system shown in Fig. 1 when acquiring a list of recorded content in accordance with an input by the user of the user equipment;
Fig. 10 is a sequence diagram showing an operation of the content delivery system shown in Fig. 1 when transmitting stored content data to the user equipment in accordance with an input by the user of the user equipment;
Fig. 11 is a sequence diagram showing an operation of the content delivery system shown in Fig. 1 when stopping transmission of content data in accordance with an input by the user of the user equipment;
Fig. 12 is a sequence diagram showing an operation of the content, delivery system shown in Fig. 1 when deleting recorded content;
Fig. 13 is a sequence diagram showing an operation of a content delivery system according to a modified example 1 of the first exemplary embodiment when authenticating the user of the user equipment;
Fig. 14 is a sequence diagram showing an operation of a content delivery system according to a modified example 2 of the first exemplary embodiment when authenticating the user of the user equipment;
Fig. 15 is a sequence diagram showing an operation of a content delivery system according to a modified example 3 of the first exemplary embodiment when recording content based on recording content information;
Tig. 16 is a sequence diagram showing an operation of a content delivery system according to a modified example 4 of the first exemplary embodiment when recording content based on schedule information;
Fig. 17 is a sequence diagram showing an operation of the content delivery system according to the modified example 4 of the first exemplary embodiment when stopping recording content;
Fig. 18 is a sequence diagram showing an operation of the content delivery system according to the modified example 4 of the first exemplary embodiment when deleting recorded content;
Fig. 19 is a block diagram schematically showing a function of a content delivery system according to a modified example 5 of the first exemplary embodiment;
Fig. 20 is a sequence diagram showing an operation of the content delivery system according to the modified example 5 of the first exemplary embodiment when recording content based on recording content information;
Fig. 21 is a sequence diagram showing an operation of a content delivery system according to a modified example 6 of the first exemplary embodiment when stopping transmission of content data in accordance with an input by the user of the user equipment;
Fig. 22 is a block diagram schematically showing a function of a content delivery system according to a second exemplary embodiment;
Fig. 23 is a sequence diagram showing an operation of the content delivery system according to the second exemplary embodiment when registering schedule information in accordance with an input by the user of the user equipment;
Fig. 24 is a block diagram schematically showing a function of a content delivery system according to a third exemplary embodiment;
Fig. 25 is a sequence diagram showing an operation of the content delivery system according to the third exemplary embodiment when acquiring a list of schedule information in accordance with an input by the user of the user equipment;
Fig. 26 is a block diagram schematically showing a function of a content delivery system according to a fourth exemplary embodiment;
Fig. 27 is a sequence diagram showing an operation of the content delivery system according to the fourth exemplary embodiment when acquiring a list of schedule information in accordance with an input by the user of the user equipment; and
Fig. 28 is a block diagram schematically showing a function of a content delivery system according to an eighth exemplary embodiment.

### EXEMPLARY EMBODIMENT

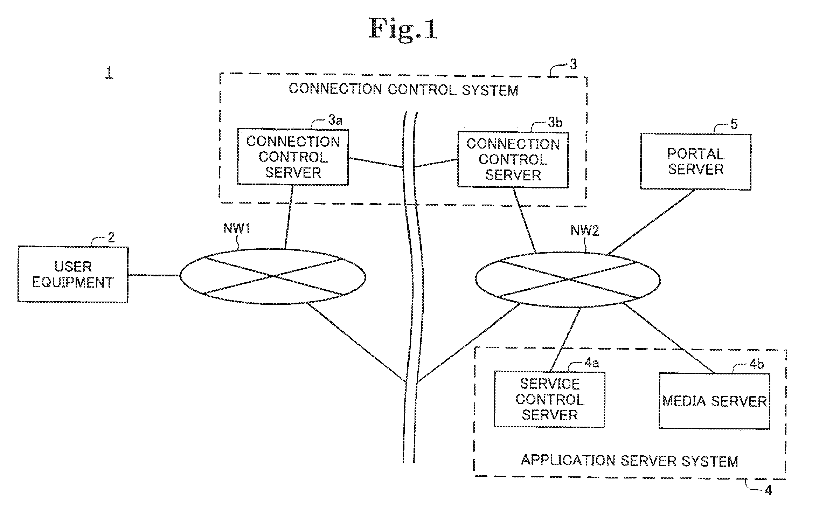

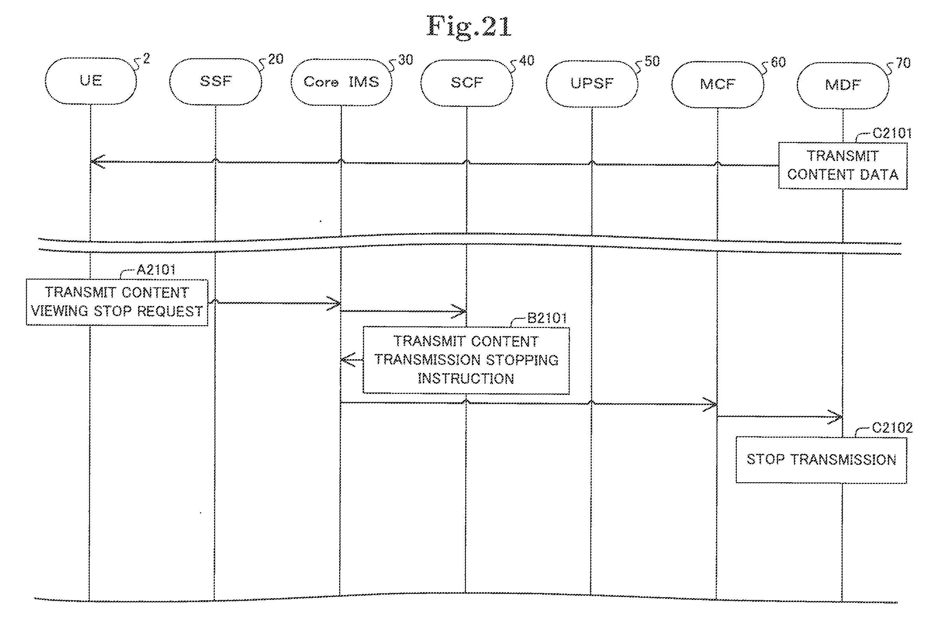

Below, exemplary embodiments of a content delivery system, a content delivery method, an application server system and a computer program according to the present invention will be described with reference to Figs. 1 to 28.

### <First Exemplary Embodiment>

### (Configuration)

As shown in Fig. 1, a content delivery system 1 according to a first exemplary embodiment is an IPTV (Internet Protocol Television) system that broadcasts content. The content delivery system 1 may be a video-on-demand system that delivers content data accumulated (stored) in advance.

The content delivery system 1 includes user equipment (UE) 2, a connection control system 3, an application server system 4, and a portal server 5. The connection control system 3 includes a plurality of servers including a connection control server 3a and a connection control server 3b. The application server system 4 includes a plurality of servers including a service control server 4a and a media server 4b.

The user equipment 2 and the connection control server 3a are connected so as to be capable of communicating with each other via a user-side communication line NW1 configuring an IP (Internet Protocol) network. The connection control server 3b, the application server system 4 and the portal server 5 are connected so as to be capable of communicating with each other via a service-provider-side communication line NW2 configuring the abovementioned IP network.

The user equipment 2 is provided with a set top box and a remote controller, which are not shown in the drawings. The set top box is connected to a television, which is not shown in the drawings. The set top box receives content data representing content (a moving image composed of sounds and images in this exemplary embodiment) transmitted by the media server 4b, and converts the received content data to cause the television to output the content.

The remote controller is provided with a plurality of buttons (button-type switches). When the buttons are pressed by a user, the remote controller transmits infrared signals corresponding to the buttons to the set top box. The set top box receives the infrared signals from the remote controller to accept information inputted by the user.

Further, in the user equipment 2, equipment specification information, which is information for specifying the equipment (the equipment itself), is stored in a memory serving as a storing device.

The connection control server 3a, the connection control server 3b, the service control server 4a, the media server 4b and the portal server 5 (i.e., the servers 3a to 5) are each provided with a central processing unit (CPU) and a storing device (a memory and a hard disk drive (HDD)) that are not shown in the drawings. Each of the servers 3a to 5 is configured to realize a function described later by execution of a program stored in the storing device by the CPU.

The connection control server 3a and the connection control server 3b are each configured to transmit and receive SIP messages (messages according to SIP (Session Initiation Protocol)) to control a connection among a plurality of devices. That is to say, the connection control server 3a and the connection control server 3b are SIP servers.

The connection control system 3 is configured to, when receiving an SIP message including equipment specification information transmitted by the user equipment 2, establish a connection (a session) between the application server system 4 and the user equipment 2 based on the equipment specification information included in the received SIP message.

The service control server 4a controls a service (a service of transmitting content data) provided by the media server 4b. The media server 4b transmits content data representing content to the user equipment 2 connected by the connection control system 3.

The portal server 5 is configured to transmit and receive a message according to HTTP (Hypertext Transfer Protocol) (an HTTP message) to transmit and receive data to and from the user equipment 2. That is to say, the portal server 5 is a web server.

### (Function)

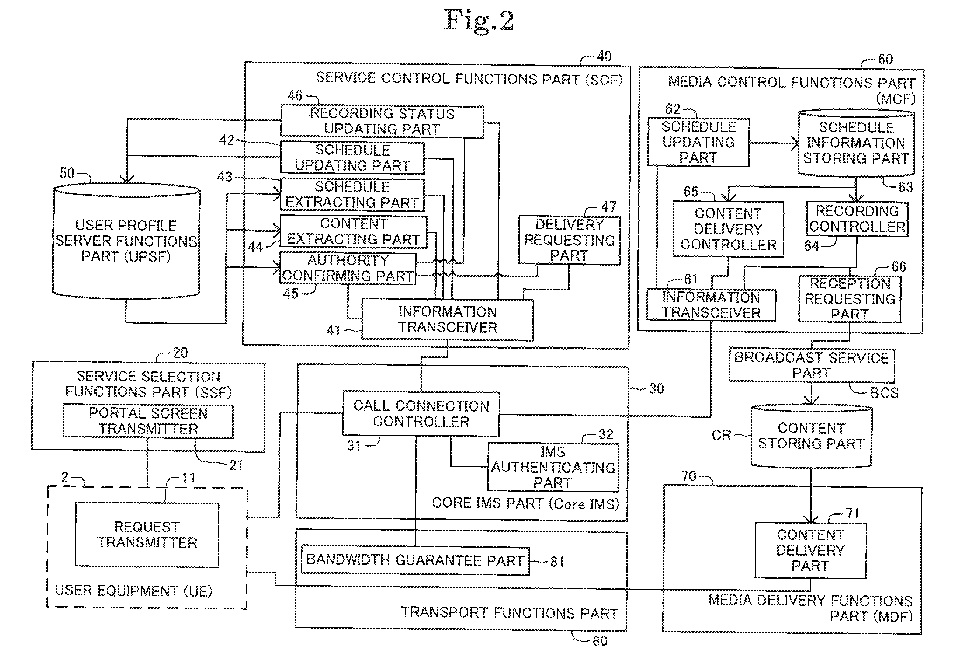

Fig. 2 is a block diagram showing a function of the content delivery system 1 configured as described above.

### (Function: User Equipment)

The function of the user equipment 2 includes a request transmitter 11. When a power switch of the user equipment 2 is turned on (electric power is supplied thereto), the request transmitter 11 transmits an SIP message as an equipment authenticating process request including stored equipment specification information, to the connection control server 3a.

Further, the request transmitter 11 transmits an SIP message including user authenticating information inputted by the user of the user equipment 2 via the remote controller, as a user authenticating process request to the connection control system 3. In this exemplary embodiment, user authenticating information is composed of user identification information representing a text for identifying the user of the user equipment 2, and password information representing a text as a password.

Further, the request transmitter 11 receives an SIP message including user authentication success information from the connection control system 3. User authentication success information is information including user identification information and representing that the user identified by the user identification information is authenticated as a valid user.

When receiving user authentication success information from the connection control system 3, the request transmitter 11 transmits an SIP message including the received user authentication success information (i.e., the user identification information), a process request of requesting the application server system to execute the process, and the equipment specification information, to the connection control system 3 in response to a request transmission instruction inputted by the user of the user equipment 2.

### (Function: Connection Control System)

The function of the connection control system 3 includes a Core IMS (Internet Protocol Multimedia Subsystem) part 30 and a transport functions part 80.

The Core IMS part 30 includes a call connection controller 31, and an IMS authenticating part (a user authenticating unit) 32. The call connection controller 31 transmits and receives SIP messages to control a connection among a plurality of devices.

Further, when the connection control server 3a receives an equipment authenticating process request from the user equipment 2, the IMS authenticating part 32 determines whether or not equipment specification information included in the received equipment authenticating process request corresponds to (in this exemplary embodiment, coincides with) equipment authenticating criterion information, thereby determining whether the user equipment 2 is valid equipment or not (executing an equipment authenticating process). Here, equipment authenticating criterion information is information previously stored in the storing device of the connection control system 3.

Then, in a case that the IMS authenticating part 32 authenticates the user equipment 2 as valid equipment, the call connection controller 31 thereafter executes a process (e.g., a process of transferring a message to the application server system 4) based on a message (a process request, etc.) transmitted by the user equipment 2. On the other hand, in a case that the IMS authenticating part 32 does not authenticate the user equipment 2 as valid equipment, the call connection controller 31 does not thereafter execute a process based on a message (a process request, etc.) transmitted by the user equipment 2.

Furthermore, when the connection control server 3a receives a user authenticating process request from the user equipment 2, the IMS authenticating part 32 determines whether or not user authenticating information included in the received user authenticating process request corresponds to the user authenticating criterion information, thereby determining whether a user identified with user identification information included in the user authenticating information is a valid user or not (whether a user identified with the user identification information coincides with the user of the user equipment 2 or not) (executing a user authenticating process), Here, the user authenticating criterion information is information previously stored in the storing device of the connection control system 3. That is to say, the storing device of the connection control system 3 configures a user authenticating criterion information storing unit.

Then, in a case that the IMS authenticating part 32 authenticates the user identified with the user identification information as a valid user, the call connection controller 31 transmits an SIP message including user authentication success information to the user equipment 2. On the other hand, in a case that the IMS authenticating part 32 does not authenticate the user identified with the user identification information as a valid user, the call connection controller 31 does not transmit an SIP message including user authentication success information to the user equipment 2.

Furthermore, in the case of receiving a bandwidth guarantee instruction from the service control server 4a, the call connection controller 31 establishes a connection between the media server 4b and the user equipment 2. A bandwidth guarantee instruction includes media delivery specification information for specifying a media delivery functions part 70 (i.e., the media server 4b), and communication bandwidth information representing a communication bandwidth. The call connection controller 31 transmits the received communication bandwidth information, and communication path specification information that specifies a communication path between the media server 4b specified by the received media delivery specification information and the user equipment 2, to the transport functions part 80.

Further, the transport functions part 80 includes a bandwidth guarantee part 81. The bandwidth guarantee part 81 receives the communication bandwidth information and the communication path specification information from the call connection controller 31, and executes a process (a bandwidth guaranteeing process) for guaranteeing a communication bandwidth represented by the received communication bandwidth information in the communication path specified by the received communication path specification information.

### (Function: Service Control Server)

On the other hand, the function of the service control server 4a includes a service control functions part (SCF) 40, and a user profile server functions part (UPSF) 50.

The user profile server functions part 50 stores a recording content table in association with equipment specification information and user identification information. That is to say, the user profile server functions part 50 stores profile information of the user of the user equipment 2.

The recording content table is a table including a plurality of recording content information each composed of content data identification information, broadcast service identification information, recording start date and time, recording finish date and time, program information, a recording status, sharer authority information, and controller identification information. Recording content information may be composed of only some information among content data identification information, broadcast service identification information, recording start date and time, recording finish date and time, program information, a recording status, sharer authority information and controller identification information, or may include other information.

Content data identification information is information for identifying content data stored by a content storing part CR described later. Moreover, broadcast service identification information is information for identifying a broadcast station (a channel) of a broadcast service part BCS described later.

Recording start date and time (storing start date and time) is information representing date and time to start storing content data. Moreover, recording finish date and time (storing finish date and time) is information representing date and time to finish storing content data.

Program information is information representing the matter of content represented by content data, A recording status is information representing the storing status of content data. A recording status is set to "scheduled" before content data is stored, set to "being recorded" while content data is being stored, set to "recording finished" after storing of content data is completed, set to "recording failed" in a case that storing of content data is finished before completed in spite of no instruction by the user, and set to "recording uncompleted" in a case that storing of content data is finished before completed in accordance with an instruction by the user.

Sharer authority information is information including user identification information as sharing-user identification information and process request specification information in pair. Process request specification information is information for specifying a process request. Sharer authority information represents that, in a case that a process request specified with process request specification information is transmitted by a user identified with sharing-user identification information, execution of a process based on the process request is allowed.

Controller identification information is information including user identification information. Controller identification information represents that, in a case that any process request is transmitted by a user identified with user identification information, execution of a process based on the process request is allowed, Sharer authority information and controller identification information may be collectively managed as authority information, For example, sharer authority information and controller identification information may be managed in a list called as a controller/sharing-user identification information (Authorized Control User, Access Control List).

Further, the service control functions part 40 includes an information transceiver 41, a schedule, updating part 42, a schedule extracting part 43, a content extracting part 44, an authority confirming part 45, a recording status updating part 46, and a delivery requesting part 47,

The information transceiver 41 receives a variety of information (requests, instructions, notices, etc.) transmitted by the user equipment 2 or the media server 4b via the Core IMS part 30 (through the Core IMS part 30). Moreover, the information transceiver 41 transmits a variety of information to the user equipment 2 or the media server 4b via the Core IMS part 30. In this exemplary embodiment, a variety of information is included in an SIP message.

The service control server 4a executes a process based on a process request only in the case of receiving user authentication success information together with the process request from the user equipment 2. That is to say, the application server system 4 executes a process based on user identification information and a process request in a case that the IMS authenticating part 32 authenticates a user identified with user identification information as a valid user.

The schedule updating part 42 updates (adds, changes or deletes) recording content information stored in the user profile server functions part 50, based on a process request received by the information transceiver 41.

In a case that the information transceiver 41 receive user identification information, equipment specification information and a schedule list transmitting process request, the schedule extracting part 43 specifies a recording content table stored in association with the received user identification information and equipment specification information from among the recording content tables stored by the user profile server functions part 50.

Then, the schedule extracting part 43 extracts recording content information with a recording status "scheduled" from recording content information included in the specified recording content table.

Further, in a case that the information transceiver 41 receives user identification information, equipment specification information and a content list transmitting process request, the content extracting part 44 specifies a recording content table stored in association with the received user identification information and equipment specification information from among the recording content tables stored by the user profile server functions part 50.,

Then, the content extracting part 44 extracts recording content information with a recording status "recording finished" or "recording uncompleted" from recording content information included in the specified recording content table.

The authority confirming part 45 accepts user identification information, equipment specification information, content data identification information, and process request specification information. Then, the authority confirming part 45 executes an authority confirming process of determining whether at least one of first to third conditions described below is satisfied or not based on the accepted user identification information, equipment specification information, content data identification information and process request specification information. The authority confirming part 45 outputs authority existing information in a case that it is determined that at least one of the following first to third conditions is satisfied.

The first condition is a condition that at least one of recording content information included in a recording content table stored in association with the accepted user identification information and equipment specification information among the recording content tables stored by the user profile server functions part 50 includes the accepted content data identification information.

The second condition is a condition that at least one of recording content information included in a recording content table stored by the user profile server functions part 50 includes the accepted content data identification information and sharer authority information including the accepted user identification information and process request specification information.

The third condition is a condition that at least one of recording content information included in a recording content table stored by the user profile server functions part 50 includes the accepted content data identification information and controller identification information identical to the accepted user identification information.

In a case that the information transceiver 41 receives user identification information, equipment specification information and a recording status changing instruction, the recording status updating part 46 specifies a recording content table stored in association with the received user identification information and equipment specification information from among the recording content tables stored by the user profile server functions part 50. A recording status changing instruction is an instruction including content data identification information and information representing a recording status after change.

Then, the recording status updating part 46 specifies recording content information including content data identification information included in the received recording status changing instruction, from recording content information included in the specified recording content table. Furthermore, the recording status updating part 46 changes (updates) a recording status included in the specified recording content information to a recording status after change represented by information included by the received recording status changing instruction.

In a case that the information transceiver 41 receives a content transmitting process request, the delivery requesting part 47 outputs a content transmitting instruction including content data identification information included by the content transmitting process request. The information transceiver 41 transmits the content transmitting instruction outputted by the delivery requesting part 47, to the media server 4b via the Core IMS part 30.

### (Function: Media Server)

The function of the media server 4b includes a media control functions part (MCF) 60, a media delivery functions part (MDF) 70, and a content storing part CR. The media control functions part 60 and the media delivery functions part 70 configure a media functions part (MF).

The content storing part CR receives content data transmitted by a broadcast service part. BCS as the exterior of the application server system 4, and stores the received content data into a storing device at all times. That is to say, the content storing part CR stores all the content data transmitted by the broadcast service part BCS into the storing device.

The broadcast service part BCS is configured to be capable of simultaneously transmitting a plurality of content data different from each other. Each of the content data transmitted by the broadcast service part BCS forms one broadcasting station (channel). The broadcast service part BCS transmits content data to the content storing part CR in response to a request.

The media control functions part 60 includes an information transceiver 61, a schedule updating part 62, a schedule information storing part 63, a recording controller 64, a content delivery controller 65, and a reception requesting part 66.

The information transceiver 61 receives a variety of information transmitted by the service control server 4a via the Core IMS part 30. Moreover, the information transceiver 61 transmits a variety of information to the service control server 4a via the Core IMS part 30.

The schedule updating part 62 updates (adds, changes or deletes) schedule information stored by the schedule information storing part 63, based on a process instruction received by the information transceiver 61.

The schedule information storing part 63 stores a schedule table in association with equipment specification information and user identification information. The schedule table is a table including a plurality of schedule information composed of a combination of content data identification information, recording start date and time, recording finish date and time, and broadcast service identification information.

At the recording start date and time included in the schedule information stored by the schedule information storing part 63, the recording controller 64 transmits a recording status changing instruction that including the content data identification information included in the schedule information and information representing "being recorded" as a recording status after change, to the service control functions part 40 via the Core IMS part 30.

In a like manner, at the recording finish date and time included in the schedule information stored by the schedule information storing part 63, the recording controller 64 transmits a recording status changing instruction that includes the content data identification information included in the schedule information and information representing "recording finished" as a recording status after change, to the service control functions part 40 via the Core IMS part 30.

In a case that the information transceiver 61 receives a content transmitting instruction, the content delivery controller 65 determines the media delivery functions part 70 to transmit content, data, based on content data identification information and equipment specification information included in a content transmitting instruction. The content delivery controller 65 transmits media delivery specification information for specifying the determined media delivery functions part 70, and the content data identification information, to the service control server 4a via the Core IMS part 30.

The service control server 4a determines a communication bandwidth necessary for transmitting content data identified with the content data identification information, based on the received media delivery specification information and content identification information. The service control server 4a transmits a bandwidth guaranteeing instruction, including communication bandwidth information representing the determined communication bandwidth and the received media delivery specification information, to the Core IMS part 30. Furthermore, the service control server 4a transmits the received media delivery specification information and content data identification information, to the user equipment 2 via the Core IMS part 30.

At the time of start of the media server 4b, the reception requesting part 66 transmits a reception start request to the broadcast service part BCS. In this exemplary embodiment, a reception start request is information representing a request for transmission of content data of all broadcast stations,

The media delivery functions part 70 includes a content delivery part 71. The content delivery part 71 receives a content transmission request from the user equipment 2. The content transmission request includes content data identification information. The content delivery part 71 transmits, to the user equipment 2, content data identified from content data identification information included in the received content transmission request among the content data stored by the content storing part CR. At this moment, the content delivery part 71 transmits data in accordance with a predetermined communication protocol (in this exemplary embodiment, RTP (Real-time Transport Protocol) by using the session established by the Core IMS part 30.

### (Function: Portal Server)

The function of the portal server 5 includes a service selection functions part 20. The service selection functions part 20 includes a portal screen transmitter 21.

The portal screen transmitter 21 receives a portal screen request transmitted by the user equipment 2. The portal screen transmitter 21 transmits portal screen information to the user equipment 2 in accordance with the received portal screen request.

### (Operation)

Next, the operation of the content delivery system 1 will be specifically described.

### (Operation: Authenticating Process)

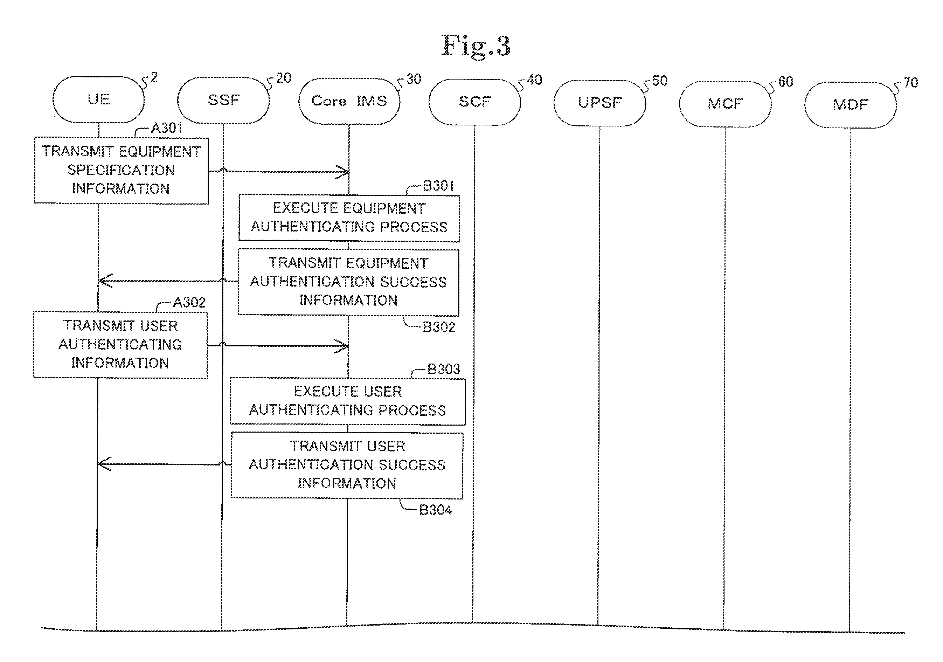

The operation of the content delivery system 1 when the content delivery system 1 authenticates the user equipment 2 and the user of the user equipment 2 will be described with reference to a sequence diagram of Fig. 3.

First, the user turns on the power switch of the user equipment 2, whereby electric power is supplied to the user equipment 2. Consequently, the user equipment 2 transmits an equipment authenticating process request including stored equipment specification information, to the connection control server 3a (the Core IMS part 30) (step A301, an equipment specification information transmitting step).

The Core IMS part 30 determines whether or not the equipment specification information included in the received equipment authenticating process request corresponds to (in this exemplary embodiment, coincides with) previously stored equipment authenticating criterion information, thereby determining whether the user equipment 2 is valid equipment or not (executing an equipment authenticating process) (step B301). Then, in a case that the user equipment 2 is authenticated as valid equipment, the Core IMS part 30 transmits equipment authentication success information to the user equipment 2 (step B302). Equipment authentication success information is information representing that the user equipment 2 is authenticated as valid equipment.

When receiving the equipment authentication success information, the user equipment 2 causes the not-shown television to display an image prompting the user to input user authenticating information. Consequently, the user manipulates the remote controller to input user authenticating information.

Then, when receiving the input of the user authenticating information, the user equipment 2 transmits a user authenticating process request including the accepted user authenticating information, to the Core IMS part 30 (step A302, a user authenticating information transmitting step),

Consequently, the Core IMS part 30 receives the user authenticating process request (a user authentication information receiving step). The Core IMS part 30 determines whether or not the user authenticating information included in the received user authenticating process request corresponds to (in this exemplary embodiment, coincides with) previously stored user authenticating criterion information, thereby determining whether the user identified with the user identification information included in the user authenticating criterion information is a valid user or not (executing a user authenticating process) (step B303, a user authenticating process). Then, in a case that the user identified with the user identification information is authenticated as a valid user, the Core IMS part 30 transmits user authenticating success information to the user equipment 2 (step B304).

Consequently, the user equipment 2 receives the user authentication success information. Then, the user equipment 2 thereafter transmits an SIP message that includes the user authentication success information including the user identification information and a process request, to the Core IMS part 30.

### (Operation: Schedule Information Registering Process)

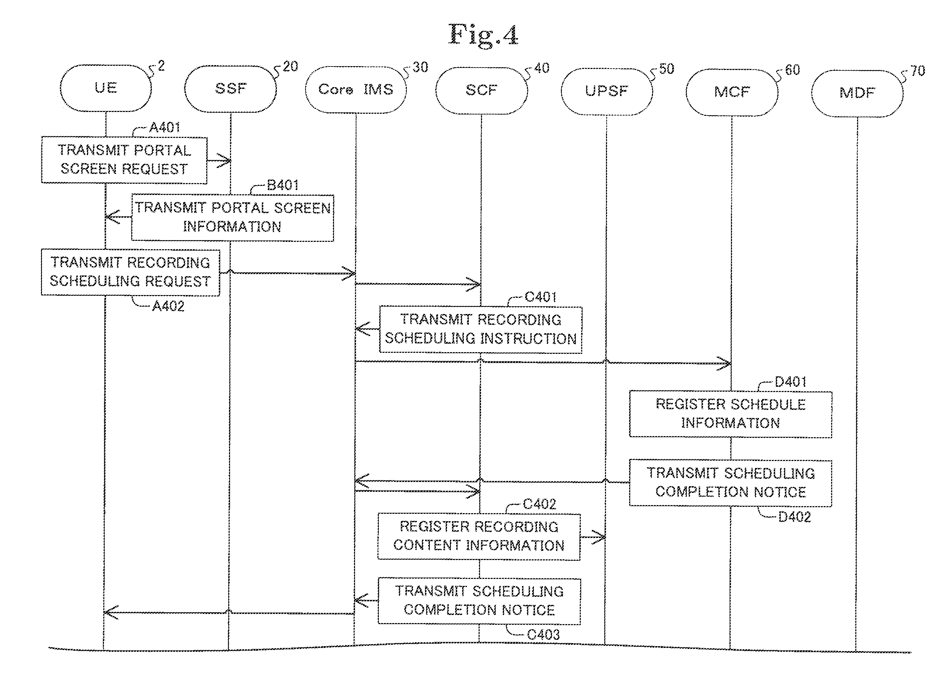

Next, the operation of the content delivery system 1 when the content delivery system 1 registers schedule information in response to an input by the user of the user equipment 2 will be described with reference to a sequence diagram of Fig. 4.

Firstly, the user of the user equipment 2 inputs information on an instruction to transmit a portal screen request to the portal server 5 (the service, selection functions part 20) via the remote controller. Consequently, the user equipment 2 transmits a portal screen request to the service selection functions part 20 (step A401).

Consequently, in response to the received portal screen request, the service selection functions part 20 transmits portal screen information representing a portal screen to the user equipment 2 (step B401). Then, the user equipment 2 receives the portal screen information, and causes the not-shown television to display an image represented by the received portal screen information. This image includes a list of content scheduled to be broadcasted by each broadcast station.

Then, the user of the user equipment 2 selects content, and inputs information on an instruction to record the selected content. Moreover, the user of the user equipment 2 inputs controller identification information. In addition, the user of the user equipment 2 may input sharer authority information.

Consequently, the user equipment 2 transmits a content storing process request (a recording scheduling request), user authentication success information and equipment specification information to the Core IMS part 30 (step A402, a request transmitting step),

The content storing process request is a process request that includes content specification information for specifying content selected by the user and inputted controller identification information (in a case that controller identification information and sharer authority information are inputted, the controller identification information and the sharer authority information; the same as above hereinafter), and that requests the application server system 4 to execute a process for storing content data representing the content. Here, the content specification information includes broadcast service identification information, recording start date and time, and recording finish date and time.

The Core IMS part 30 receives the equipment specification information, user authentication success information and content storing process request that have been transmitted by the user equipment 2, and transmits the received equipment specification information, user authentication success information and content storing process request to the service control server 4a (the service control functions part 40) (a request transferring step). That is to say, the user equipment 2 transmits the content storing process request, the user authentication success information and the equipment specification information to the service control information 40 via the Core IMS part 30.

Then, the service control functions part 40 receives the equipment specification information, the user authentication success information, and the content storing process request. Next, in response to the received content storing process request, the service control functions part 40 transmits a content storing process request (a recording scheduling instruction) to the media server 4b (the media control functions part 60) via the Core IMS part 30 (step C401). The content storing process instruction includes the equipment specification information, user identification information, and the content specification information.

Then, the media control functions part 60 adds (registers) schedule information into a schedule table associated with the equipment specification information and user identification information that are included in the received content storing process instruction (step D401). This schedule information includes the recording start date and time, recording finish date and time and broadcast service identification information that are included by the content specification information included by the received content storing process instruction, and also includes content data identification information newly generated by the media control functions part 60.

Next, the media control functions part 60 transmits a scheduling completion notice to the service control functions part 40 via the Core IMS part 30 (step D402). The scheduling completion notice is information including the content data identification information. Consequently, the service control functions part 40 receives the scheduling completion notice.

Then, the service control functions part 40 adds (registers) recording content information to a recording content table associated with the received equipment specification information and user identification information (step C402). This recording content information includes: the content data identification information included by the received scheduling completion notice; the broadcast service identification information, recording start date and time and recording finish date and time that are included by the content specification information included by the received content storing process request; a recording status representing "scheduled"; and the controller identification information included by the received content storing process request.

Then, the service control functions part 40 transmits the scheduling completion notice to the user equipment 2 via the Core IMS part 30 (step C403), Then, upon reception of the scheduling completion notice, the user equipment 2 causes the not-shown television to display an image representing that scheduling of recording has been completed.

### (Operation: Schedule List Acquiring Process)

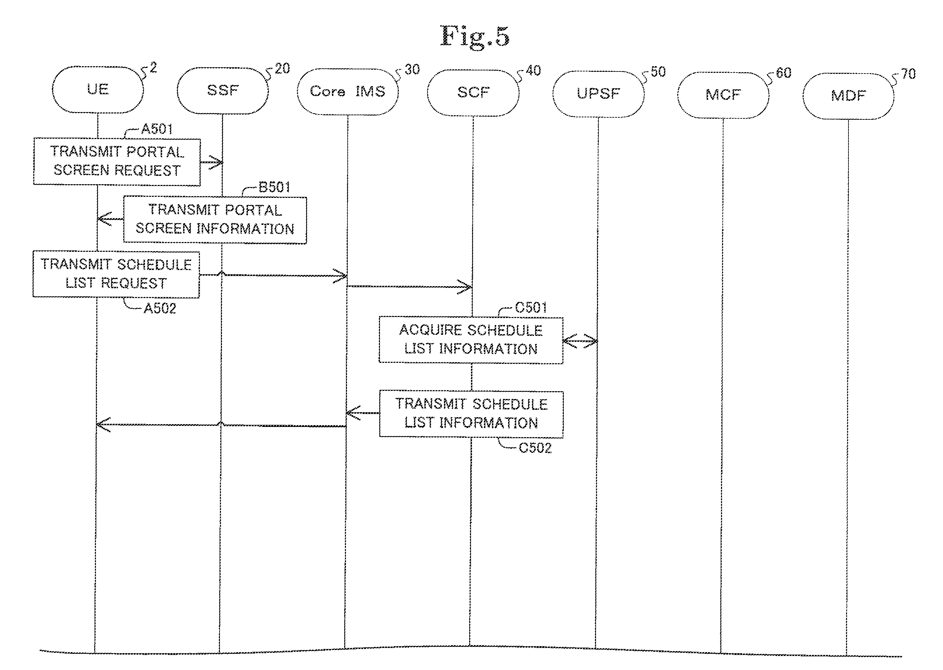

Next, an operation of the content, delivery system 1 when the content delivery system 1 acquires a list of schedule information in response to an input by the user of the user equipment 2 will be described with reference to a sequence diagram of Fig. 5.

First, the user equipment 2 transmits a portal screen request to the service selection functions part 20 (step A501). Consequently, in response to the received portal screen request, the service selection functions part 20 transmits portal screen information representing a portal screen to the user equipment 2 (step B501). Then, the user equipment 2 causes the not-shown television to display an image represented by the received portal screen information. This image includes a menu for instructing to request a schedule list.

Then, the user of the user equipment 2 inputs information on selection of the menu for instructing to request a schedule list. Consequently, the user equipment 2 transmits a schedule list transmitting process request (a schedule list request), user authentication success information and equipment specification information to the service control functions part 40 via the Core IMS part 30 (step A502). The schedule list transmitting process request is information is information representing a request for a process based on stored schedule information to the application server system 4.

Consequently, the service control functions part 40 receives the equipment specification information, the user authentication success information, and the schedule list transmitting process request. Next, the service control functions part 40 specifies a recording content table stored in association with the received user identification information and equipment specification information, from among recording content tables stored in the user profile server functions part 50.

Then, the service control functions part 40 extracts recording content information with a recording status "scheduled," from recording content information included in the specified recording content table. Next, the service control functions part 40 generates (acquires) schedule list information representing a list of schedule information based on the extracted recording content information (step C501).

Next, the service control factions part 40 transmits the acquired schedule list information to the user equipment 2 via the Core IMS part 30 (step C502). Then, upon reception of the schedule list information, the user equipment 2 causes the not-shown television to display the list of schedule information represented by the schedule list information.

### (Operation: Schedule Editing Process)

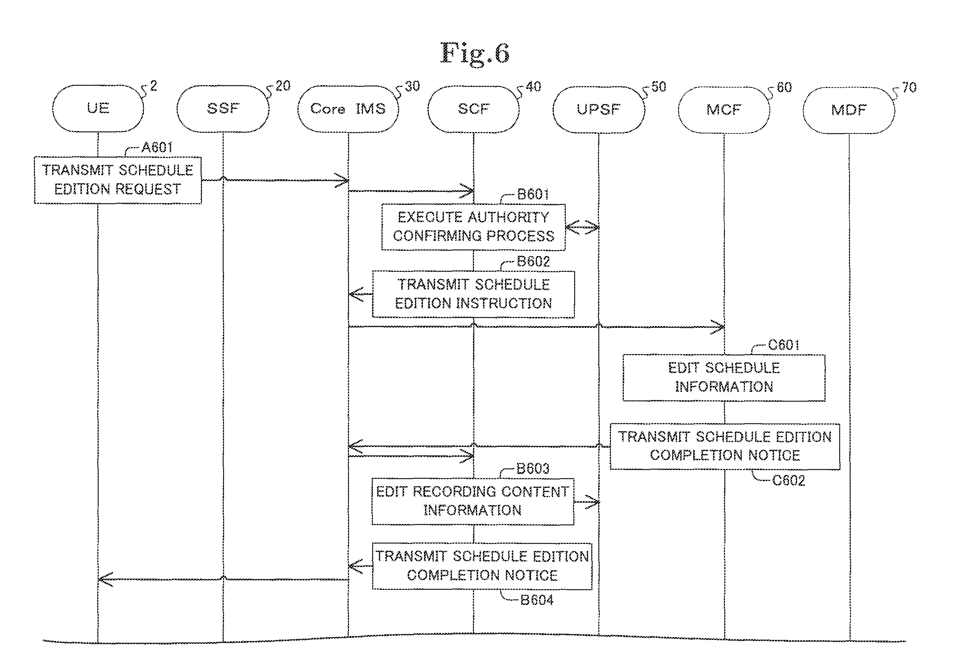

Next, an operation of the content delivery system 1 when the content delivery system 1 edits schedule information in response to an input by the user of the user equipment 2 will be described with reference to a sequence diagram of Fig. 6. Deletion of schedule information is also included in the editing process,

In a state that a list of schedule information is displayed on the television, the user of the user equipment 2 selects schedule information, and inputs schedule information specification information that specifies the selected schedule information. The schedule information specification information includes content data identification information. Furthermore, the user inputs edition matter information that represents the matter of edition of the selected schedule information (e.g., recording start date and time after edition).

Consequently, the user equipment 2 transmits a schedule editing process request (a schedule edition request) including the schedule information specification information and edition matter information that have been inputted, user authentication success information and equipment specification information to the service control functions part 40 via the Core IMS part 30 (step A601).

Consequently, the service control functions part 40 receives the equipment specification information, the user authentication success information, and the schedule editing process request, Next, the service control functions part 40 executes the abovementioned authority confirming process based on the received equipment specification information, the user identification information and content data identification information, and process request specification information that specifies the schedule editing process request (step B601).

Assuming at least one of the abovementioned first to third conditions is satisfied, the explanation will be continued. In a case that none of the abovementioned first to third conditions is satisfied, the service, control functions part 40 transmits information representing nonexistence of authority to the user equipment 2 via the Core IMS part 30, and does not execute a process at and after step B602 described later.

According to the above assumption, the service control functions part 40 outputs authority existence information as a result of execution of the authority confirming process. In this case, the service control functions part 40 transmits a schedule edition instruction to the media control functions part 60 via the Core IMS part 30 (step B602). The schedule edition instruction includes the equipment specification Information, the user identification information, the content data identification information, and the edition matter information.

Consequently, the media control functions part 60 receives the schedule edition instruction. Then, the media control functions part 60 specifies schedule information that includes the content data identification information included by the received schedule edition instruction, from among schedule information included in a schedule table associated with the equipment specification information and user identification information that are included by the received schedule edition instruction.

Next, the media control functions part 60 edits the specified schedule information in accordance with the matter of edition represented by edition matter information included in the received schedule edition instruction (step C601). Then, the media control functions part 60 transmits a schedule edition completion notice to the service control functions part 40 via the Core IMS part 30 (step C602). The schedule edition completion notice is information representing that edition of the schedule information has been completed. Consequently, the service control functions part 40 receives a schedule edition completion notice.

Then, the service control functions part 40 specifies recording content information including the received content data identification information, from among recording content information included in a recording content table associated with the received equipment specification information and user identification information.

Next, the service control functions part 40 edits the specified recording content information in response to the matter of edition represented by the received edition matter information (step B603), Then, the service control functions part 40 transmits the schedule edition completion notice to the user equipment 2 via the Core IMS part 30 (step B604). Then, upon reception of the schedule edition completion notice, the user equipment 2 causes the not-shown television to display an image representing that edition of the schedule information has been completed.

Accordingly, it can be said that the service control functions part 40 is configured to execute such a process in a case that content data to be processed based on the received schedule editing process request (stored content processing request) and user identification information or shared user identification information identical to the received user identification information are stored in association with each other.

### (Operation: Recording Process)

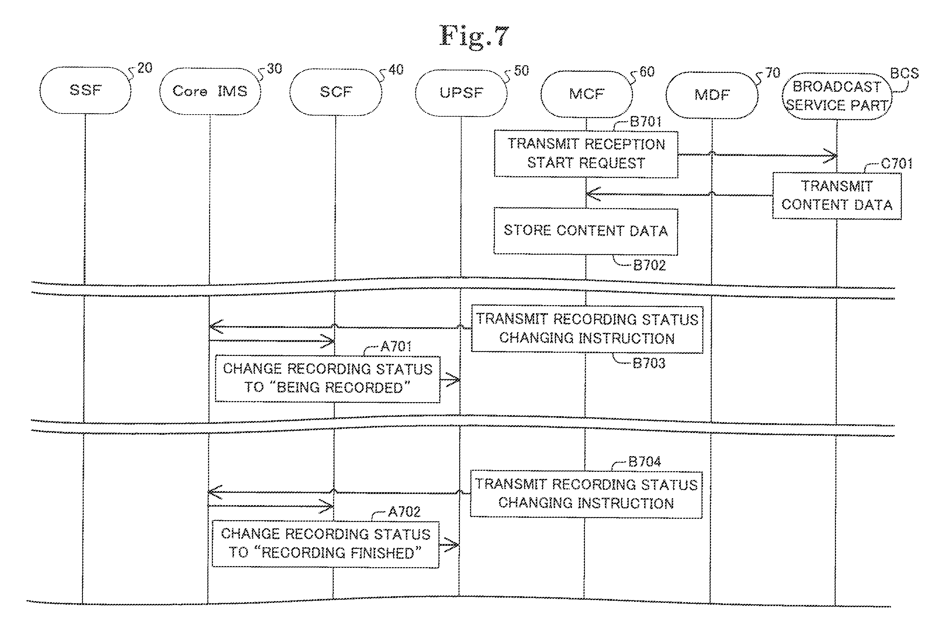

Next, an operation of the content delivery system 1 when the content delivery system 1 records content based on schedule information will be described with reference to a sequence diagram of Fig. 7.

In this content delivery system 1, the media server 4b is configured to store (all) content data transmitted by the broadcast service part BCS at all times. Therefore, when the media server 4b is started, the media control functions part 60 transmits a reception start request to the broadcast service part BCS (step B701). The reception start request is information representing a request for transmission of content data of all broadcast stations.

Upon reception of the reception start request, the broadcast service part BCS transmits content data of all broadcast stations to the media server 4b (step C701). Consequently, from this time, the content storing part CR continuously causes the storing device of the media server 4b to store all of the content data transmitted by the broadcast service part BCS (step B702; part of a content storing process step and part of a content storing processing unit),

After that, on recording start date and time included by schedule information stored in the storing device, the media control functions part 60 transmits a recording status changing instruction that includes content data identification information included by the schedule information and information representing "being recorded" as a recording status after change, to the service control functions part 40 via the Core IMS part 30 (step B703). Consequently, the service control functions part 40 receives the recording status changing instruction.

Then, the service control functions part 40 specifies recording content information including the content identification information included by the received recording status changing instruction, from among recording content information stored in the user profile server functions part 50. Furthermore, the service control functions part 40 changes (updates) a recording status included in the specified recording content information, to the recording status after change represented by the information included by the received recording status changing instruction (step A701; part of the content storing process step and part of the content storing processing unit).

After that, on recording finish date and time included by the schedule information stored in the storing device, the media control functions part 60 transmits a recording status changing instruction that includes the content data identification information included by the schedule information and information representing "recording finished" as a recording status after change, to the service control functions part 40 via the Core IMS part 30 (step B704).

Then, the service control functions part 40 specifies recording content information including the content data identification information included by the received recording status changing instruction, from among recording content information stored in the user profile server functions part 50. Furthermore, the service control functions part 40 changes (updates) a recording status included by the specified recording content information, to the recording status after change (i.e., "recording finished") represented by the information included in the received recording status changing instruction (step A702; part of the content storing process step and part of the content storing processing unit).

Thus, the user profile server functions part 50 stores content data identification information for identifying content data representing content specified by a content storing process request received by the service control functions part 40 among content data stored in the content storing part CR, and user identification information for identifying a user having instructed transmission of the content storing process request, in association with each other. That is to say, the application server system 4 stores content data identified by the content identification information and the user identification information in association with each other.

### (Operation: Recording Stopping Process)

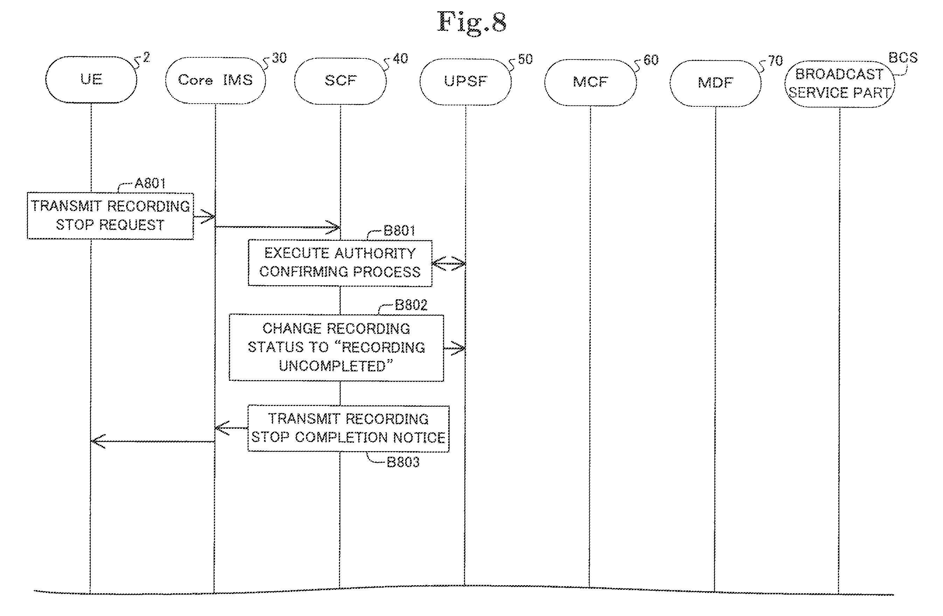

Next, an operation of the content delivery system 1 when the content delivery system 1 stops recording content will be described with reference to a sequence diagram of Fig. 8.

First, the user of the user equipment 2 inputs information representing an instruction to stop recording. Consequently, the user equipment 2 transmits a content storing stopping process request (a recording stopping request), user authentication success information and equipment specification information to the service control functions part 40 via the Core IMS part 30 (step A801). Consequently, the service control functions part 40 receives the equipment specification information, the user authentication success information, and the content storing stopping process request.

Next, the service control functions part 40 specifies a recording content table stored in association with the received user identification information and equipment specification information, from among recording content tables stored in the user profile server functions part 50, The service control functions part 40 specifies recording content information with a recording status "being recorded" from among recording content information included in the specified recording content table.

The service control functions part 40 executes the abovementioned authority confirming process based on the received user identification information and equipment specification information, content data identification information included by the specified recording content information, and process request specification information that specifies the content storing stopping process request (step B801).

Assuming at least one of the abovementioned first to third conditions is satisfied, the explanation will be continued. In a case that none of the abovementioned first to third conditions is satisfied, the service control functions part 40 transmits information representing nonexistence of authority to the user equipment 2 via the Core IMS part 30, and does not execute a process at and after step B802 described later.

According to the above assumption, the service control functions part 40 outputs authority existence information as a result of execution of the authority confirming process. In this case, the service control functions part 40 changes the recording status included by the specified recording content information, to information representing "recording uncompleted" (step B802).

Then, the service control functions part 40 transmits a recording stop completion notice to the user equipment 2 via the Core IMS part 30 (step B803). Then, upon reception of the recording stop completion notice, the user equipment 2 causes the not-shown television to display an image representing that stop of recording has been completed.

### (Operation: Content List Acquiring Process)

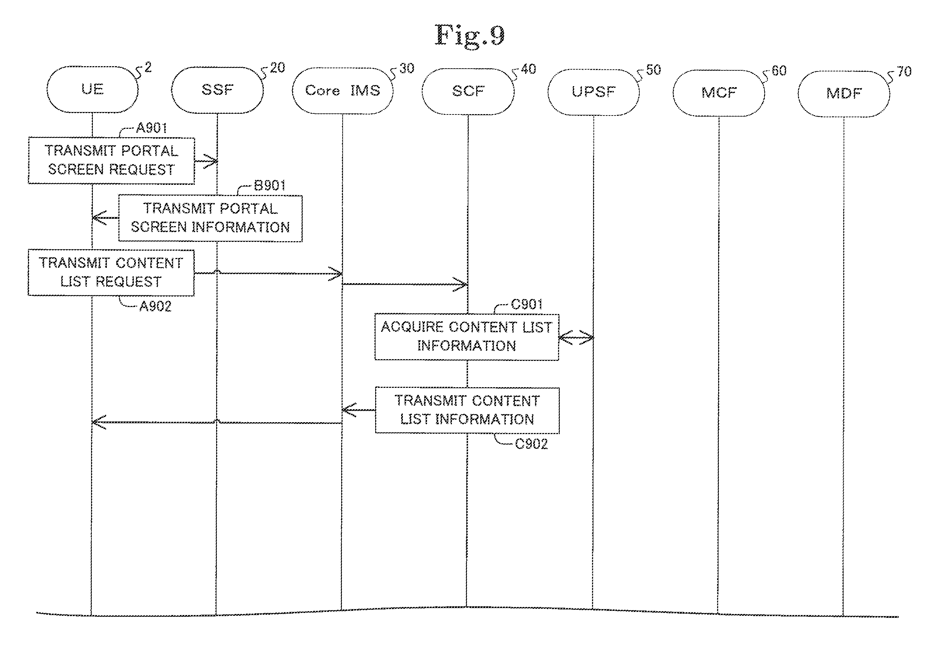

Next, an operation of the content delivery system 1 when the content delivery system 1 acquires a list of recorded content in response to an input by the user of the user equipment 2 will be described with reference to a sequence diagram of Fig. 9.

First, the user equipment 2 transmits a portal screen request to the service selection functions part 20 (step A901). Consequently, the service selection functions part 20 transmits portal screen information representing a portal screen to the user equipment 2 in response to the received portal screen request (step B901). Then, the user equipment 2 causes the not-shown television to display an image represented by the received portal screen information. This image includes a menu for instructing to request a content list.

Then, the user of the user equipment 2 inputs information on selection of the menu for instructing to request the content list. Consequently, the user equipment 2 transmits a content list transmitting process request (a content list request), user authentication success information and equipment specification information to the service control functions part 40 via the Core IMS part 30 (step A902).

Consequently, the service control functions part 40 receives the equipment specification information, the user authentication success information, and the content transmitting process request. Next, the service control functions part 40 specifies a recording content table stored in association with the received user identification information and equipment specification information, from among recording content tables stored in the user profile server functions part 50.

Then, the service control functions part 40 extracts recording content information with a recording status "recording finished'" or "recording uncompleted," from recording content information included in the specified recording content table. Next, the service control functions part 40 generates (acquires) content list information representing a list of recorded content (stored content data), based on the extracted recording content information (step C901).

Next, the service control functions part 40 transmits the acquired content list information to the user equipment 2 via the Core IMS part 30 (step C902). Then, upon reception of the content list information, the user equipment 2 causes the not-shown television to display a list of content represented by the content list information.

### (Operation: Content Viewing Process)

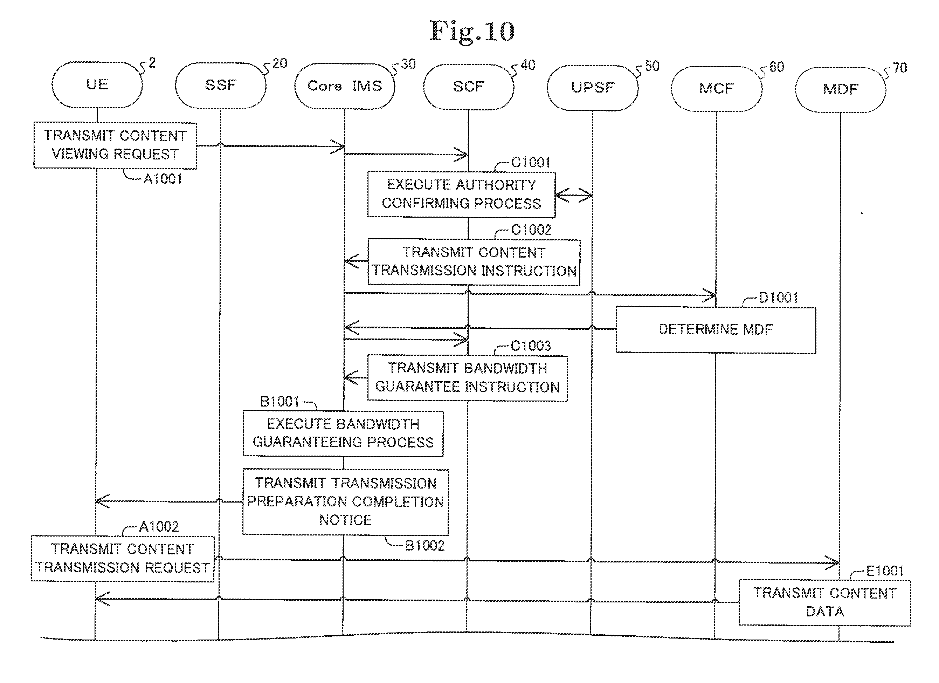

Next, an operation of the content delivery system 1 when the content delivery system 1 transmits stored content data to the user equipment 2 in response to an input by the user of the user equipment 2 will be described with reference to a sequence diagram of Fig. 10.

In a state that a list of recorded content is displayed on the television, the user of the user equipment 2 selects content, and inputs content specification information for specifying the selected content. The content specification information includes content data identification information.

Consequently, the user equipment 2 transmits a content transmitting process request (a content viewing request) including the inputted content specification information, user authentication success information and equipment specification information to the service control functions part 40 via the Core IMS part 30 (step A1001).

Consequently, the service control functions part 40 receives the equipment specification information, the user authentication success information, and the content transmitting process request. Next, the service control functions part 40 executes the abovementioned authority confirming process based on the received equipment specification information, the user identification information and content data identification information, and process request specification information that specifies the content transmitting process request (step C1001).

Assuming at least one of the abovementioned first to third conditions is satisfied, the explanation will be continued. In a case that none of the abovementioned first to third conditions is satisfied, the service control functions part 40 transmits information representing nonexistence of authority to the user equipment 2 via the Core IMS part 30, and does not execute a process at and after step C1002 described later.

According to the above assumption, the service control functions part 40 outputs authority existence information as a result of execution of the authority confirming process. In this case, the service control functions part 40 transmits a content transmission instruction to the media control functions part 60 via the Core IMS part 30 (step C1002). The content transmission instruction includes the equipment specification information, the user identification information, and the content data identification information. Consequently, the media control functions part 60 receives the content transmission instruction.

Then, the media control functions part 60 determines the media delivery functions part 70 to transmit content data, based on the content data identification information and equipment specification information that are included by the content transmission instruction, Furthermore, the media control functions part 60 transmits media delivery specification information for specifying the determined media delivery functions part 70 (in this exemplary embodiment, the media server 4b) and the content data identification information to the service control functions part 40 via the Core IMS part 30 (step D1001).

Consequently, the service control functions part 40 receives the media delivery specification information and the content data identification information. Then, the service control functions part 40 determines a communication bandwidth necessary for transmitting content data identified with the content data identification information, based on the received media delivery specification information and content data identification information.

Furthermore, the service control functions part 40 transmits a bandwidth guarantee instruction that includes communication bandwidth information representing the determined communication bandwidth and the received media delivery specification information and content data identification information, to the Core IMS part 30 (step C1003).

Upon reception of the bandwidth guarantee instruction, the Core IMS part 30 establishes a connection (a session) between the media server 4b and the user equipment 2 (a connection establishing step). Furthermore, the Core IMS part 30 transmits the received communication bandwidth information, and communication path specification information that specifies a communication path between the media server 4b specified with the received media delivery specification information and the user equipment 2, to the transport functions part 80. Consequently, the transport functions part 80 executes a process for guaranteeing the communication bandwidth represented by the received communication bandwidth information in the communication path specified with the received communication path specification information (a bandwidth guaranteeing process) (step B1001).

Then, when the bandwidth guaranteeing process is completed, the Core IMS part. 30 transmits a transmission preparation completion notice to the user equipment 2 (step B1002). The transmission preparation completion notice includes the received media delivery specification information and content data identification information.

Then, upon reception of the transmission preparation completion notice, the user equipment 2 transmits a content transmission request to the media delivery functions part 70 (in this exemplary embodiment, the media server 4b) specified with the media delivery specification information included by the transmission preparation completion notice (step A1002). The content transmission request is information that includes the content data identification information included by the transmission preparation completion notice, and that represents a request for transmission of content data identified with the content data identification information.

Then, upon reception of the content transmission request, the media delivery functions part 70 transmits content data identified with the content data identification information included by the received content transmission request among content data stored in the content storing part CR, to the user equipment 2 (step E1001; a content delivering step and a content delivering unit). At this moment, the media delivery functions part 70 transmits data by using the session established by the Core IMS part 30. Consequently, the user equipment 2 receives the content data and causes the not-shown television to output the content (in this exemplary embodiment, a moving image) represented by the received content data

### (Operation: Content viewing stopping process)

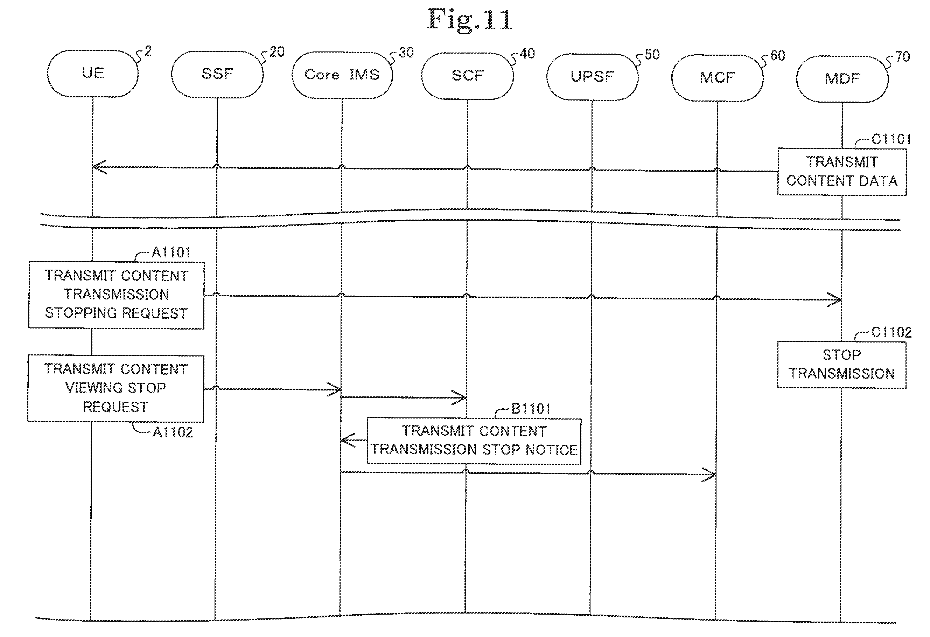

Next, an operation of the content delivery system 1 when the content delivery system 1 stops transmission of content data in response to an input by the user of the user equipment 2 will be described with reference to a sequence diagram of Fig. 11.

In a state that recorded content is outputted by the television, the user of the user equipment 2 inputs information representing an instruction to stop viewing. Consequently, the user equipment 2 transmits a content transmission stopping request to the media delivery functions part 70 (step A1101). Consequently, the media delivery functions part 70 finishes (stops) transmission of content data to the user equipment 2 (step C1102).

Furthermore, the user equipment 2 transmits equipment specification information, user authentication success information and a content transmission stopping process request (a content view stop request) to the service control functions part 40 via the Core IMS part 30 (step All 02). Consequently, the service control functions part 40 receives the equipment specification information, the user authentication success information, and the content transmission stopping process request.

Then, the service control functions part 40 transmits a content transmission stopping notice representing that transmission of content data to the user equipment 2 specified with the received equipment specification information has been stopped, to the media control functions part 60 via the Core IMS part 30 (step B1101).

### (Operation: Content Deleting Process)

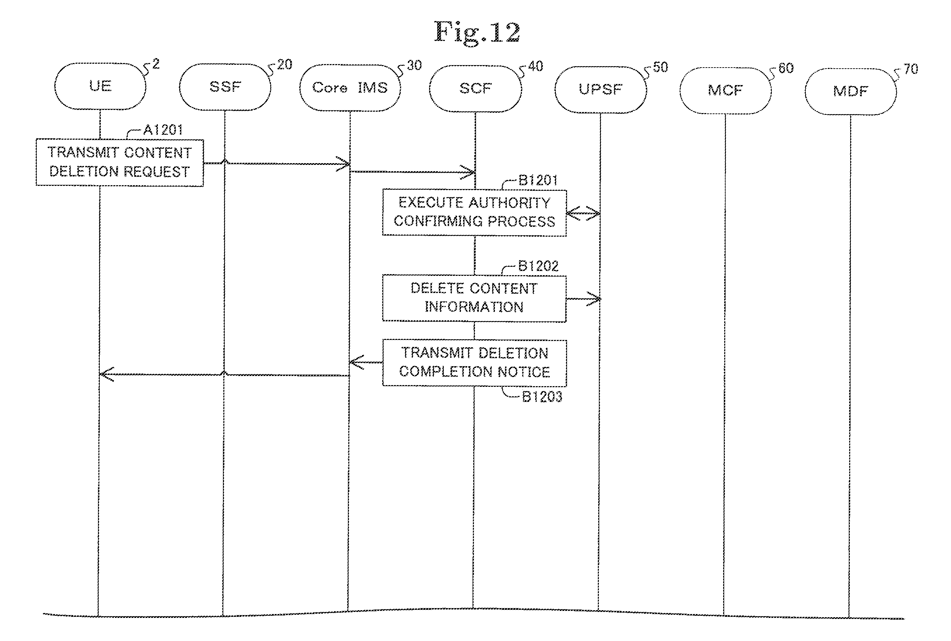

Next, an operation of the content delivery system 1 when the content delivery system 1 deletes recorded content will be described with reference to a sequence diagram of Fig. 12.

In a state that a list of recorded content is displayed on the television, the user of the user equipment 2 selects content, and inputs content specification information for specifying the selected content. The content specification information includes content data identification information.

Consequently, the user equipment 2 transmits a content deleting process request (a content deleting request) including the inputted content specification information, user authentication success information and equipment specification information to the service control functions part 40 via the Core IMS part 30 (step A1201).

Consequently, the service control functions part 40 receives the equipment specification information, the user authentication success information, and the content deleting process request. Next, the service control functions part 40 executes the abovementioned authority confirming process based on the received equipment specification information, the user identification information and content data identification information, and process request specification information that specifies the content deleting process request (step B1201).

Assuming at least one of the abovementioned first to third conditions is satisfied, the explanation will be continued. In a case that none of the abovementioned first to third conditions is satisfied, the service control functions part 40 transmits information representing nonexistence of authority to the user equipment 2 via the Core IMS part 30, and does not execute a process at and after step B1202 described later.

According to the above assumption, the service control functions part 40 outputs authority existence information as a result of execution of the authority confirming process. In this case, the service control functions part 40 specifies a recording content table recorded in association with the received user identification information and equipment specification information, from among recording content tables stored by the user profile server functions part 50.

Furthermore, the service control functions part 40 specifies recording content information including the received content identification information, from among recording content information included in the specified content table. Then, the service control functions part 40 deletes the specified recording content information from the storing device (the recording content table) (step B1202).

Then, the service control functions part 40 transmits a deletion completion notice to the user equipment 2 via the Core IMS part 30 (step B1203). Then, upon reception of the deletion completion notice, the user equipment 2 causes the not-shown television to display an image representing that deletion of content has been completed.

As described above, according to the first exemplary embodiment of the content delivery system of the present invention, the content delivery system 1 stores user identification information and content data in association with each other. Moreover, in a case that transmission of content data stored in association with the received user identification information is requested, the content delivery system 1 transmits the content data to the user equipment 2 having transmitted the user identification information. Consequently, it is possible to prevent content represented by content data stored by one user's request from being viewed by another user (an unauthorized user).

Further, in the first exemplary embodiment, when a user identified with user identification information is authenticated as a valid user, the application server system 4 executes a process based on the user identification information and a content storing process request. Consequently, it is possible to prevent the application server system 4 from executing a process based on a content storing process request transmitted by an invalid user. As a result, it is possible to more securely prevent content represented by content data stored by one user's request from being viewed by another user.

Additionally, according to the first exemplary embodiment, it is possible to prevent a list of content data stored by one user's request from being viewed by another user. Moreover, it is possible to prevent content data stored by one user's request from being deleted by another user.

Furthermore, according to the first exemplary embodiment, the content delivery system 1 stores shared user identification information for identifying a user who shares stored content data, in association with the content data. In addition, the service control functions part 40 is configured to, in a case that content data to be processed based on a stored content processing request is stored in association with user identification information or shared user identification information that is identical to received user identification information, execute the above process.

Consequently, when accepting a stored content processing request from a first user, even if content data subjected to a process based on the stored content processing request is data stored in accordance with a request by a second user, the content delivery system executes the process on the content data if it is set to share with the first user. As a result, for example, it is possible to make only the first and second users (specific users) view content represented by the content data stored by the second user. That is to say, it is possible to increase the convenience of the users.

### <Modified Example 1 of First Exemplary Embodiment>

Next, a content delivery system according to a modified example 1 of the first exemplary embodiment of the present invention will be described. The content delivery system according to the modified example 1 is different from the content delivery system according to the first exemplary embodiment in that the service control server 4a (the service control functions part 40) executes a user authenticating process. Therefore, a description will be made focusing on the different point.

The user profile server functions part 50 of the modified example 1 previously stores user authenticating criterion information. That is to say, the user profile server functions part 50 configures a user authenticating criterion information storing unit.

### (Operation: Authenticating Process)

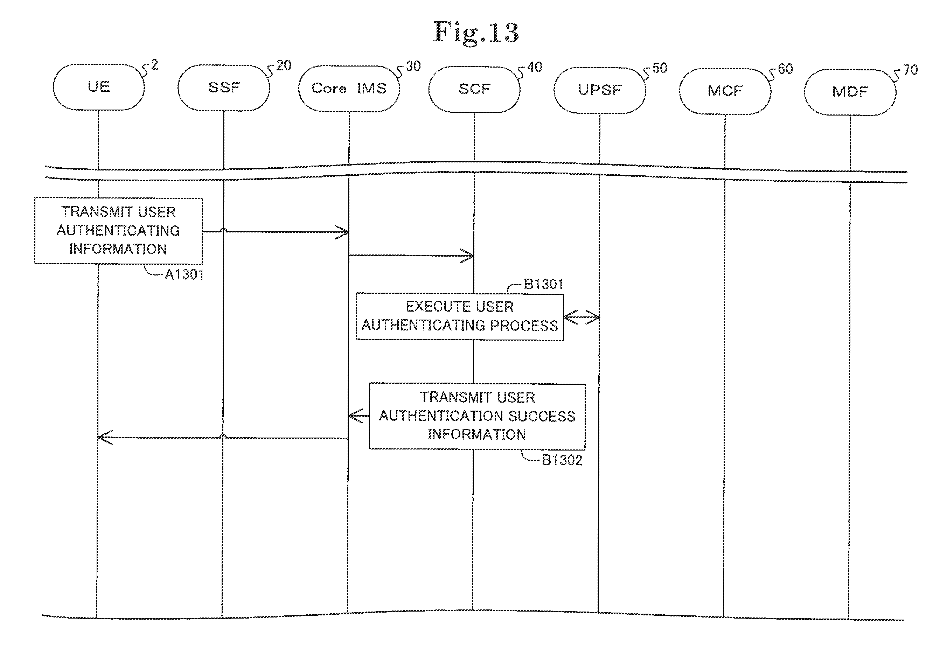

When receiving equipment authentication success information from the Core IMS part 30 and thereafter, as shown in Fig. 13, accepting an input of user authenticating information, the user equipment 2 of the content delivery system 1 transmits a user authenticating process request including the accepted user authenticating information to the service control functions part 40 via the Core IMS part 30 (step A1301).

The service control functions part 40 executes a user authenticating process based on user authenticating information included by the received user authenticating process request and the user authenticating criterion information stored in the user profile server functions part 50 (step B1301). Then, in a case that a user identified with user identification information is authenticated as a valid user, the service control functions part 40 transmits user authentication success information to the user equipment 2 via the Core IMS part 30 (step B1302).

The modified example 1 can also produce similar actions and effects to those of the first exemplary embodiment.

### <Modified Example 2 of First Exemplary Embodiment>

Next, a content delivery system according to a modified example 2 of the first exemplary embodiment of the present invention will be described. The content delivery system according to the modified example 2 is different from the content delivery system according to the first exemplary embodiment in that the portal server 5 (the service selection functions part 20) executes a user authenticating process. Therefore, a description will be made focusing on the different point,

The user profile server functions part 50 of the modified example 2 previously stores user authenticating criterion information. That is to say, the user profile server functions part 50 configures a user authenticating criterion information storing unit. Moreover, the portal server 5 and the service control server 4a (the user profile server functions part 50) are configured so as to be capable of communicating with each other.

### (Operation: Authenticating Process)

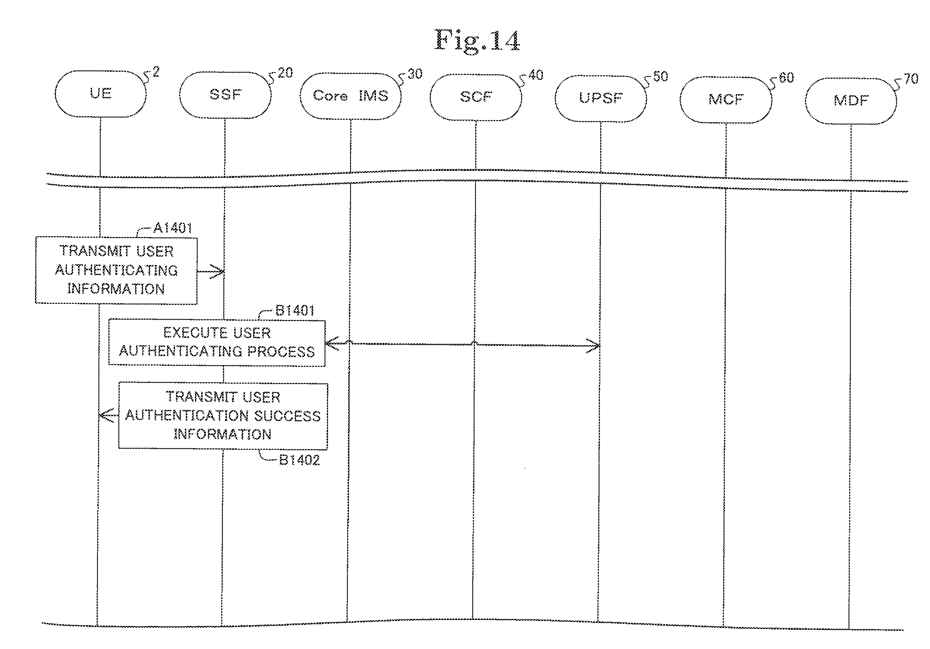

When receiving equipment authentication success information from the Core IMS part 30 and thereafter, as shown in Fig. 14, accepting an input of user authenticating information, the user equipment 2 according to this content delivery system 1 transmits a user authenticating process request including the accepted user authenticating information to the portal server 5 (the service selection functions part 20) (step A1401).

The service selection functions part 20 executes a user authenticating process based on the user authenticating information included by the received user authenticating process request and the user authenticating criterion information stored in the user profile server functions part 50 (step B1401), Then, in a case that a user identified with user identification information is a valid user, the service selection functions part 20 transmits user authentication success information to the user equipment 2 (step B1402).

The modified example 2 can also produce similar actions and effects to those in the first exemplary embodiment.

### <Modified Example 3 of First Exemplary Embodiment

Next, a content delivery- system according to a modified example 3 of the first exemplary embodiment of the present invention will be described, The content delivery system according to the modified example 3 is different from the content delivery system according to the first exemplary embodiment in that the service control server 4a has a recording controller. Therefore, the description will be made focusing on the different point.

### (Operation: Recording Process)

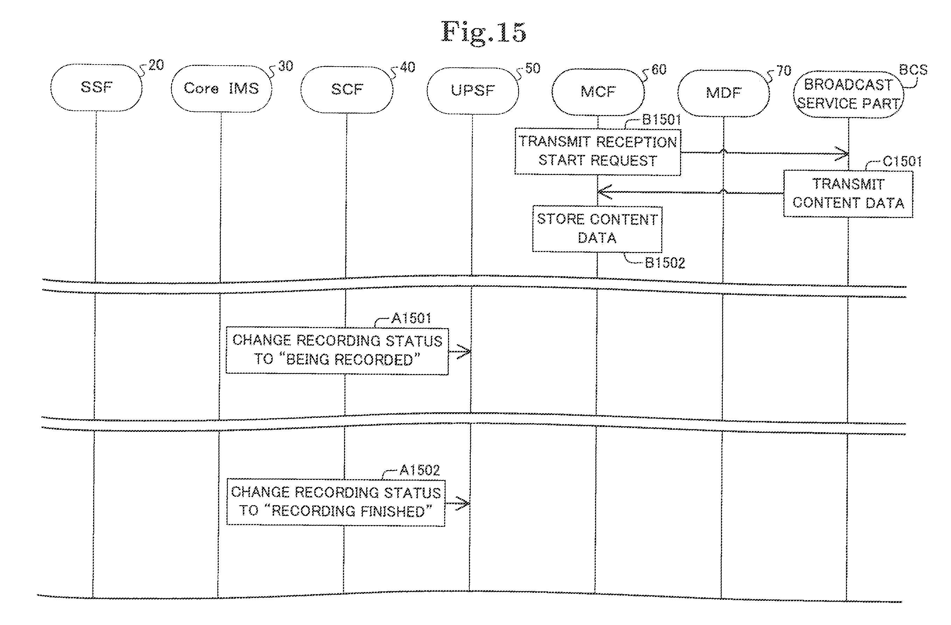

After the content storing part CR starts storing content data, the service control server 4a (the service control functions part 40) of this content delivery system 1 changes a recording status included in recording content information as shown in Fig. 15.

To be specific, at recording start date and time included in recording content information stored in the user profile server functions part 50, the service control functions part 40 changes (updates) a recording status included in the recording content information to information representing "being recorded" (step A1501: part of the content storing process step and part of the content storing processing unit).

After that, at recording finish date and time included in the recording content information stored in the user profile server functions part 50, the service control functions part 40 changes (updates) the recording status included in the recording content information to information representing "recording finished" (step A1502; part of the content storing process step and part of the content storing processing unit).

The modified example 3 can also produce similar actions and effects to those in the first exemplary embodiment.

### <Modified Example 4 of First Exemplary Embodiment)

Next, a content delivery system according to a modified example 4 of the first exemplary embodiment of the present invention will be described. The content delivery system according to the modified example 4 is different from the content delivery system according to the first exemplary embodiment in that the content storing part CR stores only content data specified with schedule information, Therefore, the description will be made focusing on the different point.

At recording start date and time included in schedule information stored in the schedule information storing part 63, the reception requesting part 66 of this content delivery system 1 transmits a reception start request to the broadcast service part BCS. In this exemplary embodiment, the reception start request is information representing a request for transmission of content data of a broadcast station identified with broadcast service identification information included in the schedule information.

Further, at recording finish date and time included in schedule information stored in the schedule information storing part 63, the reception requesting part 66 transmits a reception finish request to the broadcast service part BCS. In this example, the reception finish request is information representing a request for stop of transmission of content data of a broadcast station identified with broadcast service identification information included in the schedule information.

### (Operation: Recording Process)

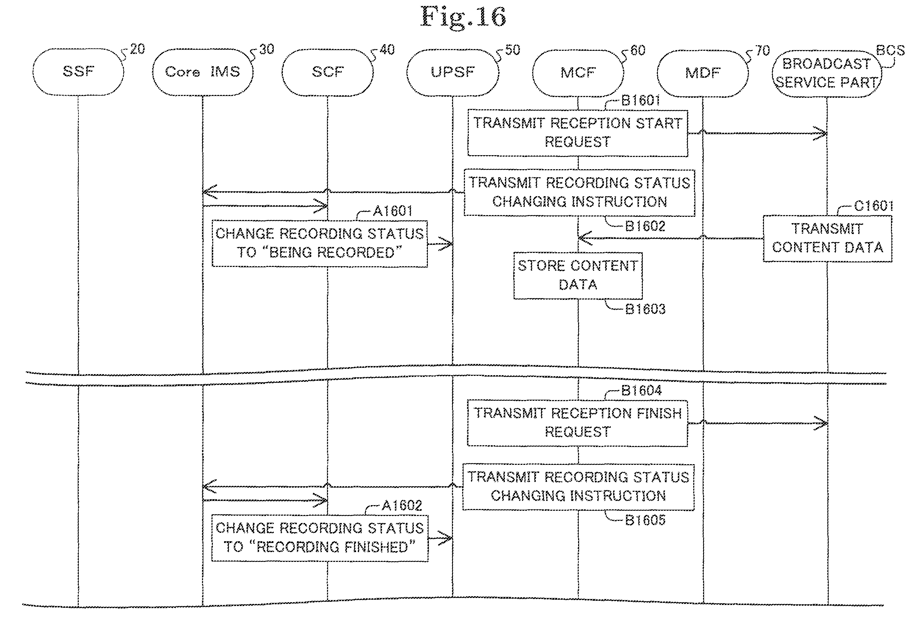

At recording start date and time included in schedule information stored in the storing device, the media server 4b (the media control functions part 60) in this content delivery system 1 transmits a reception start request to the broadcast service part BCS as shown in Fig. 16 (step B1601). Moreover, as at the abovementioned step B703, the media control functions part 60 transmits a recording status changing instruction to the service control functions part 40 via the Core IMS part 30 (step B1602).

Consequently, the service control functions part 40 changes (updates) a recording status included in recording content information specified with the recording status changing instruction among recording content information stored in the user profile server functions part 50, to information representing "being recorded" (step A1601; part of the content storing process step and part of the content storing processing unit).

On the other hand, upon reception of the reception start request, the broadcast service part BCS transmits content data of a broadcast station corresponding to the received reception start request to the media server 4b (step C1601). Consequently, the content, storing part CR starts causing the storing device of the media server 4b to store the content data transmitted by the broadcast service part BCS (step B1603; part of the content storing process step and part of the content storing processing unit).

After that, at recording start date and time included in schedule information stored in the storing device, the media control functions part 60 transmits a reception finish request to the broadcast service part BCS (step B1604). Consequently, the broadcast service part BCS stops transmission of content data of a broadcast station corresponding to the reception finish request. As a result, the content storing part CR finishes storing the content data.

Further, as at the abovementioned step B704, the media control functions part 60 transmits a recording status changing instruction to the service control functions part 40 via the Core IMS part 30 (step B1605).

Consequently, the service control functions part 40 changes (updates) a recording status included in recording content information specified with the recording status changing instruction among recording content information stored in the user profile server functions part 50, to information representing "recording finished" (step A1602; part of the content storing process step and part of the content storing processing unit).

### (Operation: Recording Stopping Process)

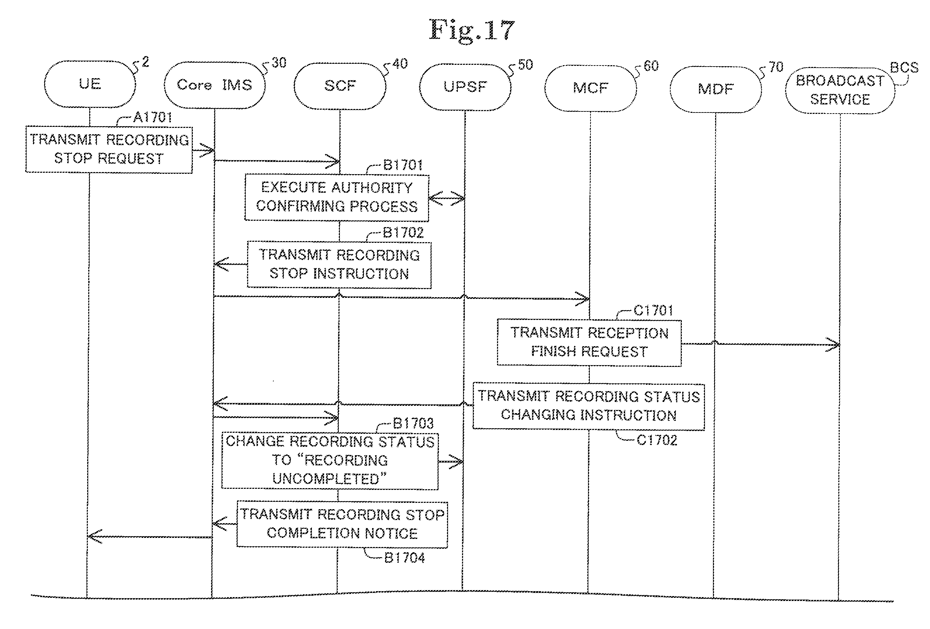

After outputting authority existence information as a result of execution of the authority confirming process, the service control functions part 40 in this content delivery system 1, as shown in Fig. 17, transmits a recording stop instruction to the media control functions part 60 via the Core IMS part 30 (step B1702). The recording stop instruction includes broadcast service identification information and content data identification information included in recording content information specified at step B1701 similar to step B801.

Then, upon reception of the recording stop instruction, the media control functions part 60 transmits a reception finish request of requesting for stop of transmission of content data of a broadcast station identified with the broadcast service identification information included in the received recording stop instruction, to the broadcast service part BCS (step C1701), Consequently, the broadcast service part BCS stops transmission of the content data of the broadcast station. As a result, the content storing part CR finishes storing the content data.

The media control functions part 60 may be configured to delete content data of content that recording has been stopped, from the content storing part CR in accordance with an instruction by a

Then, the media control functions part 60 transmits a recording status changing instruction to the service control functions part 40 via the Core IMS part 30 (step C1702). This recording status changing instruction includes the content data identification information included in the received recording stop instruction and information representing "recording uncompleted" as a recording status after change.

Consequently, the service control functions part 40 receives the recording status changing instruction. Moreover, the service control functions part 40 specifies a recording content table stored in association with the user identification information and equipment specification information having been received (having been transmitted by the user equipment 2), from among recording content information stored in the user profile server functions part 50. Then, the service control functions part 40 specifies recording content information including the content data identification information included in the received recording status changing instruction, from among recording content information included in the specified recording content table

Next, the service control functions part 40 changes (updates) a recording status included in the specified recording content information to the recording status after change included in the received recording status changing instruction (i.e., "recording uncompleted") (step B1703). After that, the service control functions part 40 transmits a recording stop completion notice to the user equipment 2 via the Core IMS part 30 as at step B803 (step B1704).

### (Operation: Content Deleting Process)

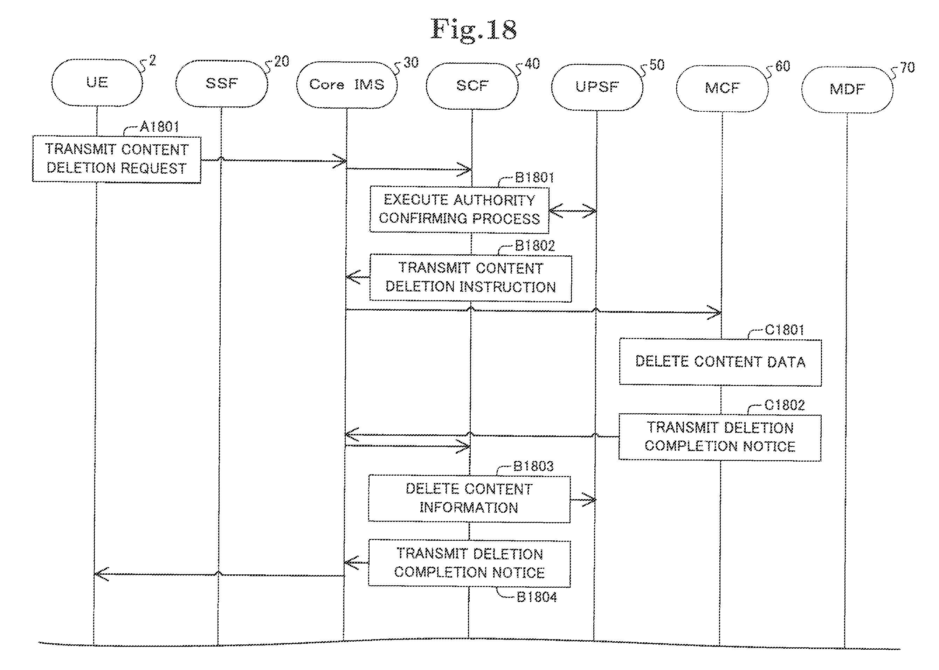

After outputting authority existence information as a result of execution of the authority confirming process, the service control functions part 40 in this content delivery system 1, as shown in Fig. 18, transmits a content deletion instruction to the media control functions part 60 via the Core IMS part 30 (step B1802). The content deletion instruction includes content data identification information included in recording content information specified at step B1801 as at step B1201,

Then, upon reception of the content deletion instruction, the media control functions part 60 deletes content data identified with the content data identification information included in the received content deletion instruction, among content data stored in the content storing part CR (step C1801). Then, the media control functions part 60 transmits a deletion completion notice including the content data identification information to the service control functions part 40 via the Core IMS part 30 (step C1802).

Upon reception of the deletion completion notice, the service control functions part 40 executes a process as at steps B1202 and B1203 of Fig. 12, thereby deleting recording content information corresponding to the deletion completion notice from the user profile server functions part 50 (steps B1803 and B1804).

The modified example 4 can also produce similar actions and effects to those of the first exemplary embodiment.

### <Modified Example 5 of First Exemplary Embodiment

Next, a content delivery system according to a modified example 5 of the first exemplary embodiment of the present invention will be described. The content delivery system according to the modified example 5 is different from the content delivery system according to the first exemplary embodiment in that both the service control server 4a and the media server 4b have recording controllers. Therefore, a description will be made focusing on the different point.

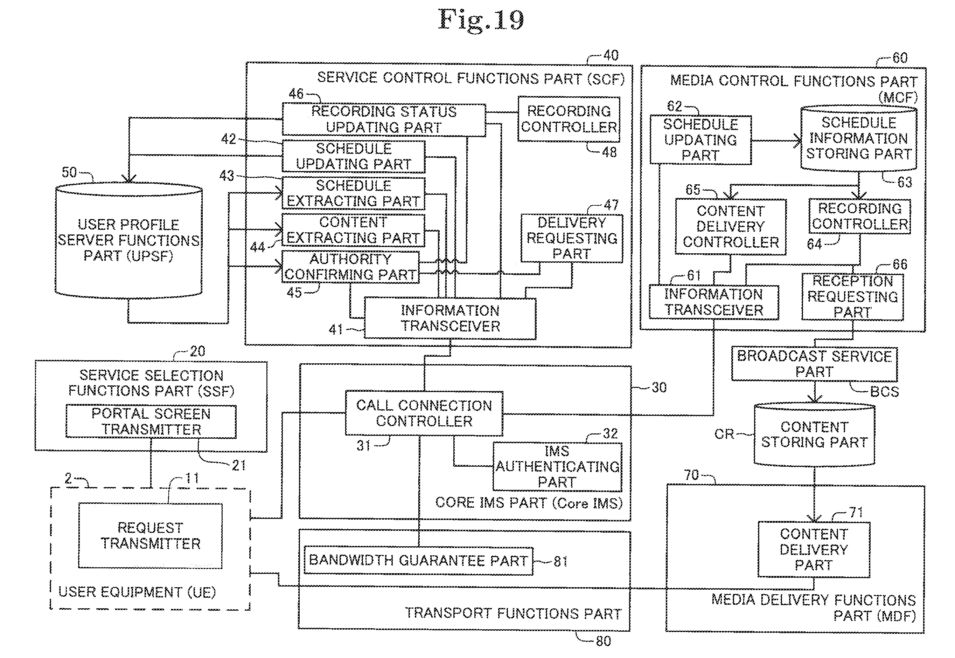

The service control functions part 40 of this content delivery system 1 includes a recording controller 48 as shown in Fig. 19. At recording start date and time included in recording content information stored in the user profile server functions part 50, the recording controller 48 changes a recording status included in the recording content information to "being recorded." Moreover, at recording finish date and time included in recording content, information stored in the user profile server functions part 50, the recording controller 48 changes a recording status included in the recording content information to "recording finished."

At recording start date and time included in schedule information stored in the schedule information storing part 63, the recording controller 64 transmits a reception start request representing a request for transmission of content data of a broadcast station identified with broadcast, service identification information included in the schedule information, to the broadcast service part. BCS. Moreover, at recording finish date and time included in schedule information stored in the schedule information storing part 63, the recording controller 64 transmits a reception finish request representing a request for stop of transmission of content data of a broadcast station identified with broadcast service identification information included in the schedule information, to the broadcast service part BCS.

### (Operation: Recording Process)

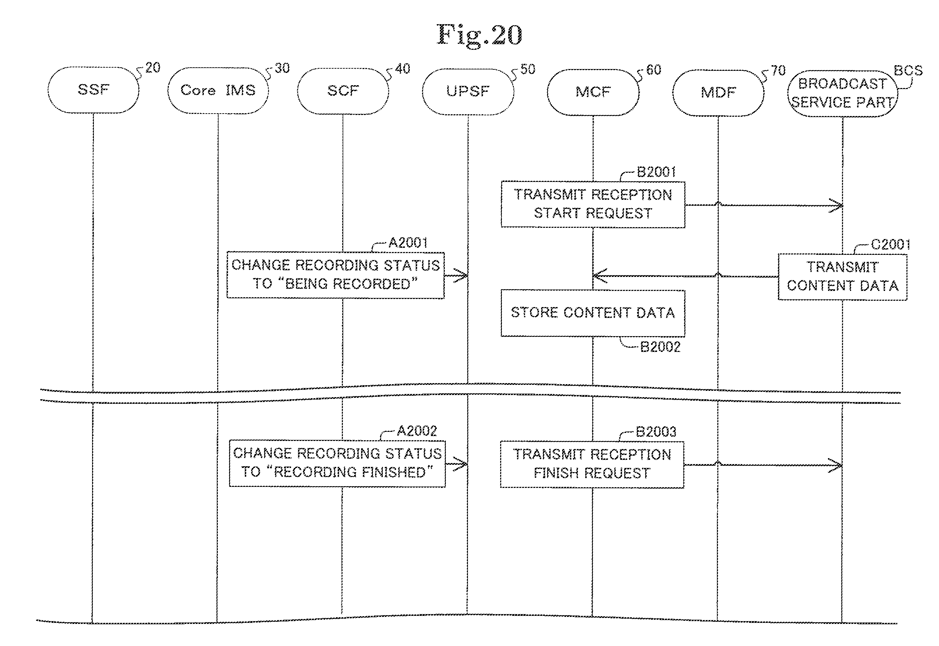

At recording start date and time included in schedule information stored in the storing device, the media server 4b (the media control functions part 60) in this content delivery system 1, as shown in Fig. 20, transmits a reception start request to the broadcast service part BCS (step B2001).

Consequently, the broadcast service part BCS transmits content data of a broadcast station corresponding to the received reception start request, to the media server 4b (step C2001). Then, the content storing part CR starts causing the storing device of the media server 4b to store the content data transmitted by the broadcast service part BCS (step B2002; part of the content storing process step and part of the content storing processing unit).

On the other hand, at recording start date and time included in recording content information stored in the user profile server functions part 50, the service control functions part 40 changes a recording status included in the recording content, information to "being recorded" (stepA2001).

After that, at recording finish date and time included in schedule information stored in the storing device, the media control functions part 60 transmits a reception finish request to the broadcast service part BCS (step B2003).

Consequently, the broadcast service part BCS stops transmitting content data of a broadcast station corresponding to the received reception finish request, As a result, the content storing part CR finishes storing the content data transmitted by the broadcast service part BCS (part of the content storing process step and part of the content storing processing unit),

On the other hand, at recording finish date and time included in recording content information stored in the user profile server functions part 50, the service control functions part 40 changes a recording status included in the recording content information to "recording finished" (step A2002).

The modified example 5 can also produce similar actions and effects to those of the first exemplary embodiment.

### <Modified Example 6 of First Exemplary Embodiment>

Next, a content delivery system according to a modified example 6 of the first exemplary embodiment of the present invention will be described. The content delivery system according to the modified example 6 is different from the content delivery system according to the first exemplary embodiment in that, when the user stops viewing content, a content transmission stopping request is not transmitted from the user equipment 2 to the media server 4b. Therefore, a description will be made below focusing on the different point.

### (Operation: Content viewing stopping process)

When information representing an instruction to stop viewing is inputted by the user, as shown in Fig, 21, the user equipment 2 of this content delivery system 1 transmits equipment specification information, user authentication success information; and a content transmission stopping process request (a content view stop request) to the service control functions part 40 via the Core IMS part 30 (step A2101). Consequently, the service control functions part 40 receives the equipment specification information, the user authentication success information, and the content transmission stopping process request.

Then, the service control functions part 40 transmits a content transmission stop instruction to the media control functions part 60 via the Core IMS part 30 (step B2101). The content transmission stop instruction includes the received equipment specification information.

Then, upon reception of the content transmission stop instruction, the media control functions part 60 controls the media delivery functions part 70 so as to stop transmission of content data to the user equipment 2 specified with the equipment specification information included by the received content transmission stop instruction. Consequently, the media delivery functions part 70 stops (finishes) transmission of the content data to the user equipment 2 (step C2102).

The modified example 6 can also produce similar actions and effects to those of the first exemplary embodiment.

The service control functions part 40 may be configured to, when receiving equipment specification information, user authentication success information and a content transmission stopping process request, execute an authority confirming process like step B801 of Fig. 8, and transmit a content transmission stop instruction to the media control functions part 60 only when outputting authority existence information.

### <Second Exemplary Embodiment

Next, a content delivery system according to a second exemplary embodiment of the present invention will be described. The content delivery system according to the second exemplary embodiment is different from the content delivery system according to the first exemplary embodiment in that the service control functions part 40 and the media control functions part 60 are configured to be capable of directly transmitting and receiving information to and from each other. Therefore, a description will be made below focusing on the different point.

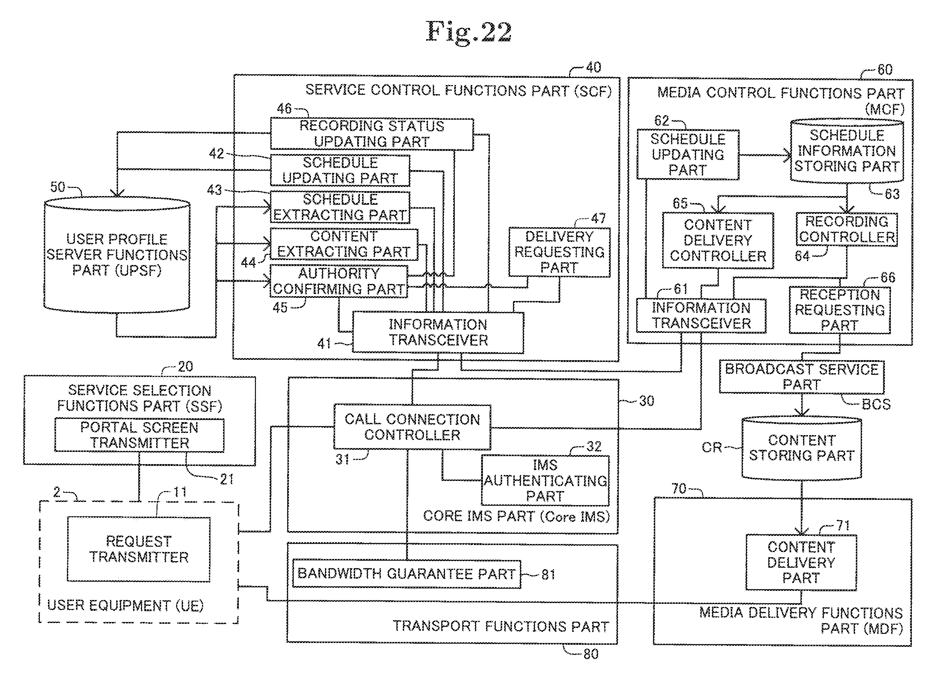

The information transceiver 41 of this content delivery system 1 transmits a variety of information (requests, instructions, notices, etc.) to the media control functions part 60 not via the Core IMS part 30 as shown in Fig. 22. Moreover, the information transceiver 41 receives a variety of information transmitted by the media control functions part 60 not via the Core IMS part 30. In this exemplary embodiment, a variety of information is included in an SIP message.

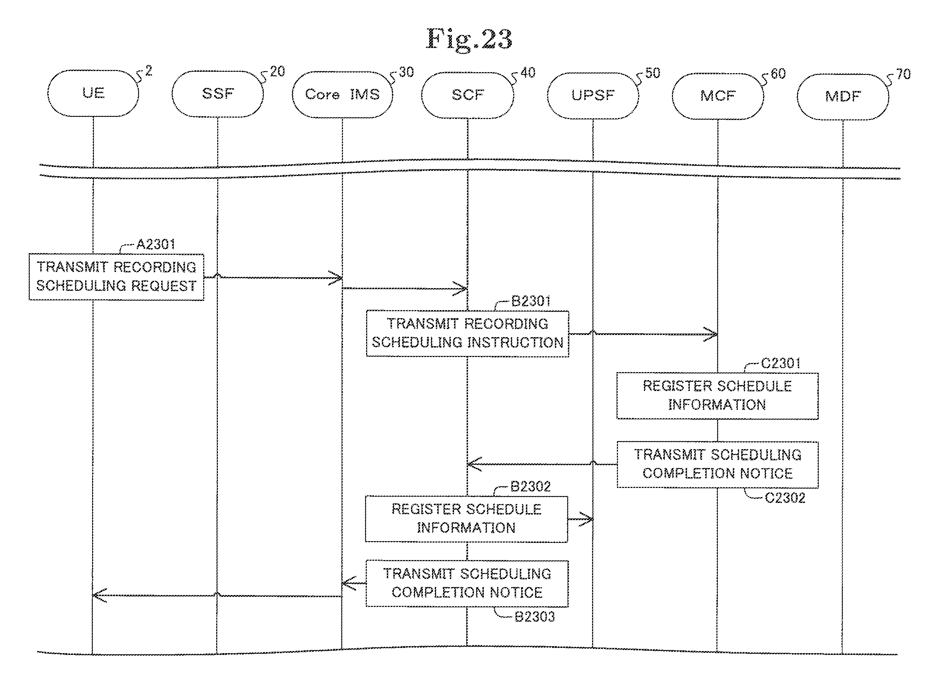

For example, in the first exemplary embodiment, the service control functions part 40 transmits a recording scheduling instruction to the media control functions part 60 via the Core IMS part 30 at step C401 of Fig. 4. On the other hand, in the second exemplary embodiment, the service control functions part 40 transmits a recording scheduling instruction to the media control functions part 60 directly (not via the Core IMS part 30) at step B2301 of Fig. 23.

Further, in the first exemplary embodiment, the media control functions part 60 transmits a scheduling completion notice to the service control functions part 40 via the Core IMS part 30 at step D402 of Fig. 4. On the other hand, in the second exemplary embodiment, the media control functions part 60 transmits a scheduling completion notice to the service control functions part 40 directly (not via the Core IMS part 30) at step C2302 of Fig. 23.

Although a description has been made by using the recording process as an example, other processes are also executed in a like manner.

The second exemplary embodiment can also produce actions and effects like those of the first exemplary embodiment. Moreover, according to the second exemplary embodiment, it is possible to reduce processing load of the connection control system 3 due to transfer of information by the connection control system 3.

### <Third Exemplary Embodiment

Next, a content delivery system according to a third exemplary embodiment of the present invention will be described. The content delivery system according to the third exemplary embodiment is different from the content delivery system according to the first exemplary embodiment in that the portal server 5 has a schedule updating part and a schedule extracting part. Therefore, a description will be made below focusing on the different point.

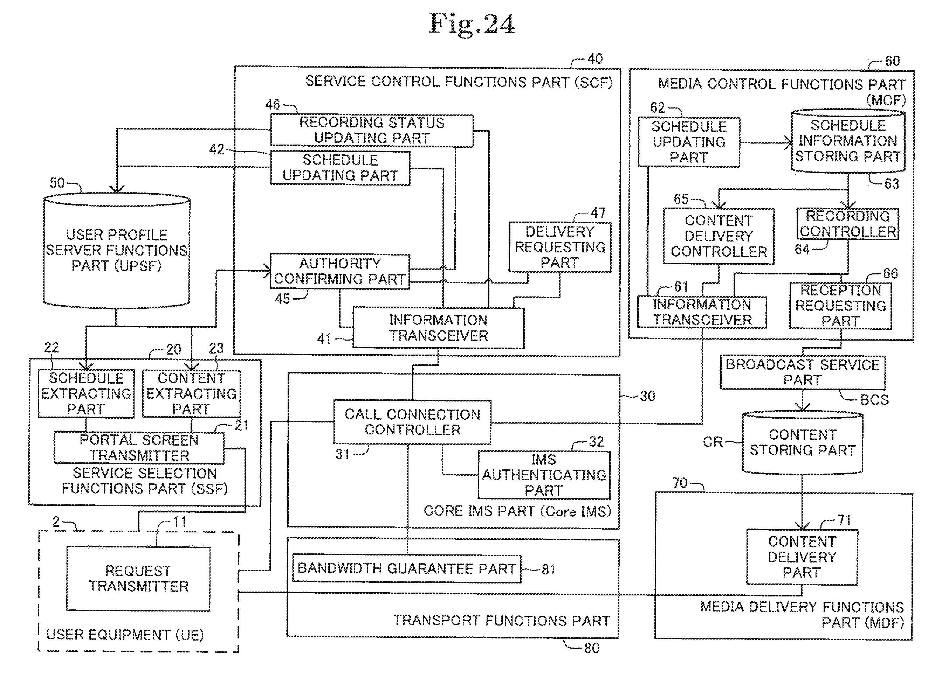

The service selection functions part 20 of this content delivery system 1 includes a schedule extracting part 22 and a content extracting part 23 similar to the schedule extracting part 43 and the content extracting part 44 as shown in Fig. 24. On the other hand, the service control functions part 40 does not include the schedule extracting part 43 and the content extracting part 44.

Further, the portal server 5 and the service control server 4a (the user profile server functions part 50) are configured to be capable of communicating with each other. In this exemplary embodiment, the portal server 5 communicates with the service control server 4a by transmitting and receiving SIP messages. The user equipment 2 communicates with the portal server 5 by transmitting and receiving HTTP messages,

### (Operation: Schedule List Acquiring Process)

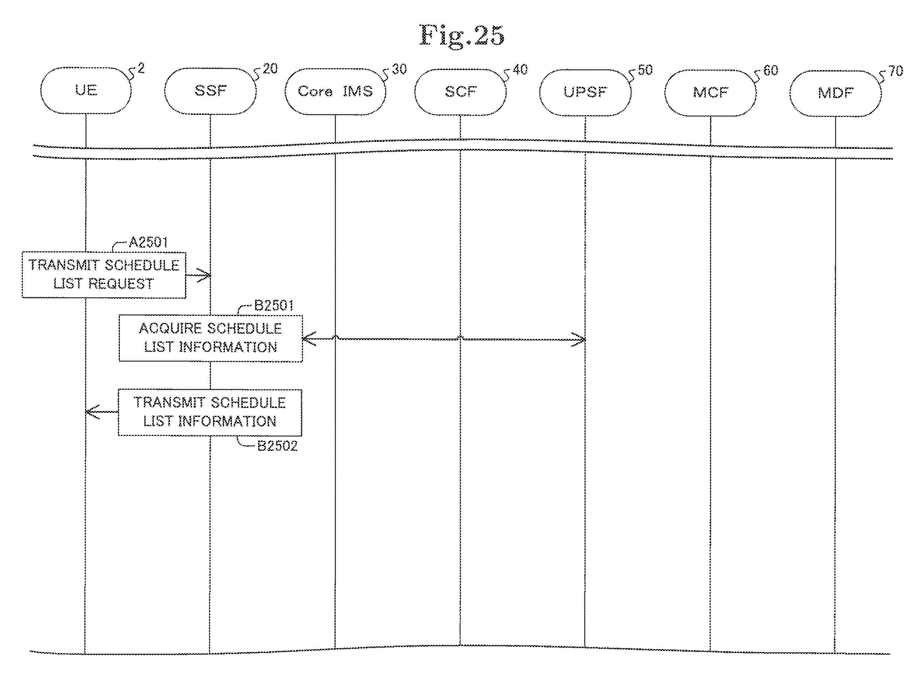

When information on selection of a menu for instructing to request for a schedule list is inputted by the user, the user equipment 2 of this content delivery system 1 transmits a schedule list transmitting process request (a schedule list request), user authentication success information and equipment specification information to the portal server 5 (the service selection functions part 20) as shown in Fig. 25 (step A2501).

Consequently, the service selection functions part 20 receives the equipment specification information, the user authentication success information, and the schedule list transmitting process request. Next, the service selection functions part 20 generates (acquires) schedule list information in a like manner as step C501 of Fig. 5 (step B2501). Then, the service selection functions part 20 transmits the acquired schedule list information to the user equipment 2 (step B2502).

Although a description has been made by using the schedule list acquiring process as an example, the content list acquiring process is also executed in a like manner.

The third exemplary embodiment can also produce actions and effects like those of the first exemplary embodiment.

### <Fourth Exemplary Embodiment

Next, a content delivery system according to a fourth exemplary embodiment of the present invention will be described. The content delivery system according to the fourth exemplary embodiment is different from the content delivery system according to the first exemplary embodiment in that the portal server 5 transfers a schedule list request and a content list request transmitted by the user equipment 2 to the service control server 4a. Therefore, a description will be made below focusing on the different point.

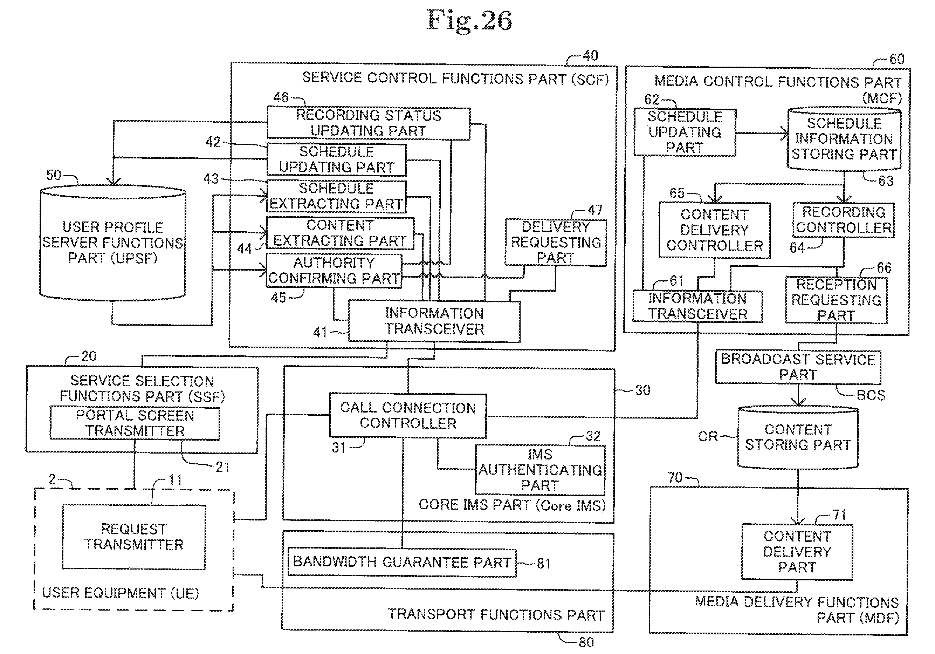

The portal server 5 and the service control server 4a (the user profile server functions part 50) of this content delivery system 1 are configured to be capable of communicating with each other as shown in Fig. 26. In this exemplary embodiment, the portal server 5 communicates with the service control server 4a by transmitting and receiving SIP messages. The user equipment 2 communicates with the portal server 5 by transmitting and receiving HTTP messages.

### (Operation: Schedule List Acquiring Process)

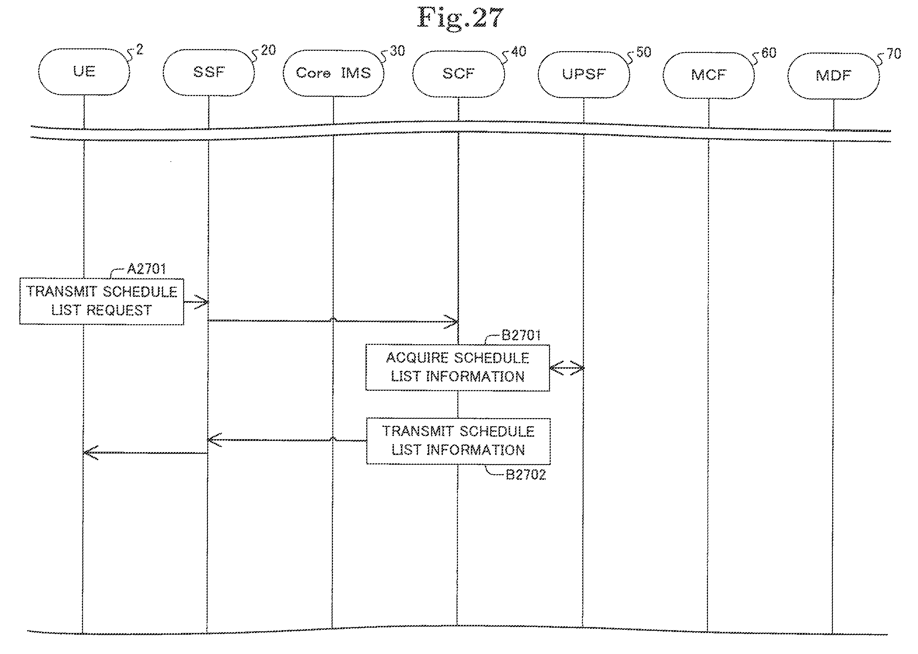

When information on selection of a menu for instructing to request for a schedule list is inputted by the user, the use equipment 2 of this content delivery system 1 transmits a schedule list transmitting process request (a schedule list request), user authentication success information and equipment specification information to the portal server 5 (the service selection functions part 20) as shown in Fig. 27 (step A2701).

Consequently, the service selection functions part 20 receives the equipment specification information, the user authentication success information, and the schedule list transmitting process request. Next, the service selection functions part 20 transmits the received equipment specification information, user authentication success information and schedule list transmitting process request to the service control functions part 40.

Then, upon reception of the equipment specification information, the user authentication success information, and the schedule list transmitting process request, the service control functions part 40 generates (acquires) schedule list information in a like manner as step C501 of Fig. 5 (step B2701). Then, the service control functions part 40 transmits the acquired schedule list information to the user equipment 2 via the service selection functions part 20 (step B2702).

Although a description has been made by using the schedule list acquiring process as an example, the content list acquiring process is also executed in a like tanner.

The fourth exemplary embodiment can also produce actions and effects like those of the first exemplary embodiment.

### <Fifth Exemplary Embodiment

Next, a content delivery system according to a fifth exemplary embodiment of the present invention will be described. The content delivery system according to the fifth exemplary embodiment is different from the content delivery system according to the first exemplary embodiment in that information used as default values of controller identification information and sharer authority information included in recording content information is previously stored. Therefore, a description will be made below focusing on the different point.

In this exemplary embodiment, controller identification information includes user identification information for identifying a user who controls schedule content (recording content information). Moreover, sharer authority information includes user identification information for identifying a user who shares content. Information composed of controller identification information and sharer authority information is also referred to as authorized control user identification information. Authorized control user identification information represents that, in a case that any process request is transmitted by a user identified with the authorized control user identification information, execution of a process based on the process request is allowed.

The user profile server functions part 50 previously stores a control user table and sharing user table set in accordance with an input by the user, in association with equipment specification information and user identification information. The control user table (or the sharing user table) may include one control user identification information (or sharing-user identification information), or may include a plurality of control user identification information (or sharing-user identification information). In a case that the control user table (or the sharing user table) does not include control user identification information (or sharing-user identification information) (the control user table (or the sharing user table) includes empty information), it is represented that a user who controls (or shares) content does not exist.

The user equipment 2 of the fifth exemplary embodiment, unlike that of the first exemplary embodiment, transmits a content storing process request that does not include controller identification information or sharer authority information, user authentication success information and equipment specification information to the Core IMS part 30 (step A402 of Fig. 4; the request transmission step).

Then, the service control functions part 40 adds (registers) recording content information to a recording content table associated with the received equipment specification information and user identification information (step C402). This recording content information includes: content data identification information included in a received scheduling completion notice; broadcast service identification information, a recording start, date and time, and recording finish date and time that are included in content specification information included in the received content storing process request; and a recording status. Moreover, the recording content information includes authorized control user identification information included in a control user table and a sharing user table that are associated with the received equipment specification information and user identification information, as controller identification information and sharer authority information.

The fifth exemplary embodiment can also produce actions and effects like those of the first exemplary embodiment. Moreover, according to the fifth exemplary embodiment, authorized control user identification information registered in the control user table and the sharing user table are used as default values of the controller identification information and sharer authority information included in recording content information, so that it is possible to save time and effort to input the controller identification information and the sharer authority information every time the user transmits a content storing process request. That is to say, it is possible to increase the convenience of the user.

In a modified example of the fifth exemplary embodiment, the service control functions part 40 may be configured to store user identification information in association with user identification information (permitted control user identification information) associated with a recording content table including recording content information including user identification information identical to the abovementioned user identification information as controller identification information or sharer authority information,

In this case, the authority confirming part 45 is configured to, when determining whether the second condition or the third condition is satisfied or not, acquire permitted control user identification information associated with accepted user identification information. Moreover, the authority confirming part 45 is configured to determine whether or not at least one of recording content information included in a recording content table associated with user identification information identical to the acquired permitted control user identification information includes controller identification information or sharer authority information including user identification information identical to the accepted user identification information,

According to this modified example, as compared with the case of searching for recording content information including authorized control user identification information identical to user identification information accepted by the authorized confirming part 45, it is possible to make processing load of the service control functions part 40 smaller, and it is possible to search for recording content information at higher speeds.

Further, in another modified example of the fifth embodiment, the authority confirming part 45 may be configured to use a fourth condition instead of the second condition when executing the authority confirming process. The fourth condition is a condition that is satisfied in a case that at least one of a fifth condition and a sixth condition is satisfied.

The fifth condition is a condition that a control user table stored in the user profile server functions part 50 includes accepted user identification information as controller identification information as well as at least one of recording content information included in a recording content table associated with equipment specification information and user identification information associated with the control user table includes controller identification information identical to the accepted user identification information.

The sixth condition is a condition that a sharing user table stored in the user profile server functions part 50 includes accepted user identification information as sharing-user identification information as well as at least one of recording content information included in a recording content table associated with equipment, specification information and user identification information associated with the sharing user table includes sharer authority information including sharing-user identification information identical to the accepted user identification information.

Further, in another modified example of the fifth exemplary embodiment, a recording content, table may be recorded in the service control functions part 40, and a control user table and a sharing user table may be stored in the user profile server functions part 50, Moreover, a recording content table, a control user table, and a sharing user table may be stored in the service control functions part 40. Moreover, a recording content table may be stored in the user profile server functions part 50, and a control user table and a sharing user table may be stored in the service control part 40.

### <Sixth Exemplary Embodiment

Next, a content delivery system according to a sixth exemplary embodiment of the present invention will be described. The content delivery system according to the sixth exemplary embodiment is different from the content delivery system according to the first exemplary embodiment in that controller identification information and sharer authority information that are common to (the same with respect to) all the recording content, information registered by one user are set. Therefore, a description will be made below focusing on the different point.

In this exemplary embodiment, as in the fifth exemplary embodiment, controller identification information includes user identification information for identifying a user who controls recording content. Moreover, sharer authority information includes user identification information for identifying a user who shares content. Information composed of controller identification information and sharer authority information is referred to as authorized control user identification information. This authorized control user identification information represents that, in a case that any process request is transmitted by a user identified with the authorized control user identification information, execution of a process based on the process request is allowed.

The user profile server functions part 50 previously stores a control user table and sharing user table set in accordance with an input by the user, in association with equipment specification information and user identification information.

The user equipment 2 of this sixth exemplary embodiment is different from that of the first exemplary embodiment, in transmitting a content storing process request that does not include controller identification information or sharer authority information, user authentication success information and equipment, specification information to the Core IMS part 30 (step A402 of Fig. 4; a request transmitting process).

Then, the service control functions part 40 adds (registers) recording content information to a recording content table associated with the received equipment specification information and user identification information (step C402). This recording content information includes: content data identification information included in a received scheduling completion notice; broadcast service identification information, recording start date and time and recording finish date and time that are included in content specification information included in the received content storing process request; and a recording status, in this exemplary embodiment, this recording content information does not include controller identification information or sharer authority information.

Further, the authority confirming part 45 is configured to, when executing the authority confirming process, use a seventh condition instead of the second condition, The seventh condition is a condition that is satisfied when at least one of an eighth condition and a ninth condition is satisfied.

The eighth condition is a condition that: a control user table stored in the user profile server functions part 50 includes accepted user identification information as controller identification information; and at least one of recording content information included in a recording content table associated with equipment specification information and user identification information associated with the control user table includes content data identification information having been accepted.

The ninth condition is that a sharing user table stored in the user profile server functions part 50 includes accepted user identification information as sharing-user identification information; and at least one of recording content information included in a recording content table associated with equipment specification information and user identification information associated with the sharing user table includes accepted content data identification information.

The sixth exemplary embodiment can also produce actions and effects like those of the first exemplary embodiment Moreover, according to the sixth exemplary embodiment, authorized control user identification information registered in the control user table and the sharing user table are used for the authority confirming process, so that it is possible to save time and effort to input the controller identification information and the sharer authority information every time the user transmits a content storing process request. That is to say, it is possible to increase the convenience of the user.

### <Seventh Exemplary Embodiment>

Next, a content delivery system according to a seventh exemplary embodiment of the present invention will be described. The content delivery system according to the seventh exemplary embodiment is different from the content delivery system according to the first exemplary embodiment in that: controller identification information and sharer authority information that are common to (the same with respect to) all the recording content information registered by one user are set; and information that changes controller identification information or sharer authority information for each content. Therefore, a description will be made below focusing on the different point.

In this exemplary embodiment, controller identification information includes user identification information for identifying a user who controls recording content. Moreover, sharer authority information includes user identification information for identifying a user who shares content. Information composed of controller identification information and sharer authority information is also referred to as authorized control user identification information. Authorized control user identification information represents that, in a case that any process request is transmitted by a user identified with the authorized control user identification information, execution of a process based on the process request is allowed.

The user profile server functions part 50 previously stores a control user table and sharing user table set in accordance with an input by the user, in association with equipment specification information and user identification information. The control user table (or the sharing user table) may include one control user identification information (or sharing-user identification information), or may include a plurality of control user identification information (or sharing-user identification information). In a case that the control user table (or the sharing user table) does not include control user identification information (or sharing-user identification information) (the control user table (or the sharing user table) includes empty information), it is represented that a user who controls (or shares) content does not exist.

The user equipment 2 of the seventh exemplary embodiment is different from that of the first exemplary embodiment in transmitting a content storing process request including controller authority change information and sharer authority change information instead of controller identification information and sharer authority information, user authentication success information, and equipment specification information to the Core IMS part 30 (step A402 of Fig. 4; the request transmitting process). Controller authority change information and sharer authority change information include information composed of user identification information and an addition flag having a value of "true" or "false."

Then, the service control functions part 40 adds (registers) recording content information to a recording content table associated with the received equipment specification information and user identification information (step C402). This recording content information includes: content data identification information included in a scheduling completion notice having been received; broadcast service identification information, recording start date and time, and recording finish date and time that are included in content specification information included in the content storing process request having been received, and a recording status. Moreover, this recording content information includes the controller authority change information and sharer authority change information that are included in the received content storing process request.

Further, the authority confirming part 45 is configured to, when executing the authority confirming process, use a tenth condition instead of the second and third conditions. The tenth condition is a condition that is satisfied when at least one of eleventh to fourteenth conditions is satisfied.

The eleventh condition is a condition that, a control user table stored in the user profile server functions part 50 includes user identification information having been accepted as controller identification information; and at least one of recording content information included in a recording content table associated with equipment specification information and user identification information associated with the control user table includes the accepted content data identification information and does not include the addition flag having the user identification information and a value of "false" as controller authority change information.

The twelfth condition is a condition that: a control user table stored in the user profile server functions part 50 does not include user identification information having been accepted as controller identification information; and at least one of recording content information included in a recording content table associated with equipment specification information and user identification information associated with the control user table includes the accepted content data identification information and also includes the addition flag having the user identification information and a value of "true" as controller authority change information.

The thirteenth condition is a condition that: a sharing user table stored in the user profile server functions part 50 includes user identification information having been accepted as sharer identification information; and at least one of recording content information included in a recording content table associated with equipment specification information and user identification information associated with the sharing user table includes the accepted content data identification information and does not include the addition flag having the user identification information and a value of "false" as sharer authority change information.

The fourteenth condition is a condition that: a sharing user table stored in the user profile server functions part 50 does not include user identification information having been accepted as sharing-user identification information; and at least one of recording content information included in a recording content table associated with equipment specification information and user identification information associated with the control user table includes the accepted content data identification information and also includes the addition flag having the user identification information and a value of "true" as sharer authority change information.

The seventh exemplary embodiment can also produce actions and effects like those of the first exemplary embodiment. Moreover, according to the seventh exemplary embodiment, authorized control user identification information registered in the control user table and the sharing user table are used for the authority confirming process, so that it is possible to save time and effort to input the controller identification information and the sharer authority information every time the user transmits a content storing process request. That is to say, it is possible to increase the convenience of the user. Additionally, according to the seventh exemplary embodiment, it is possible to change controller identification information and sharer authority information for each recording content information (for each content), so that it is possible to further increase the convenience of the user.

### <Eighth Exemplary Embodiment

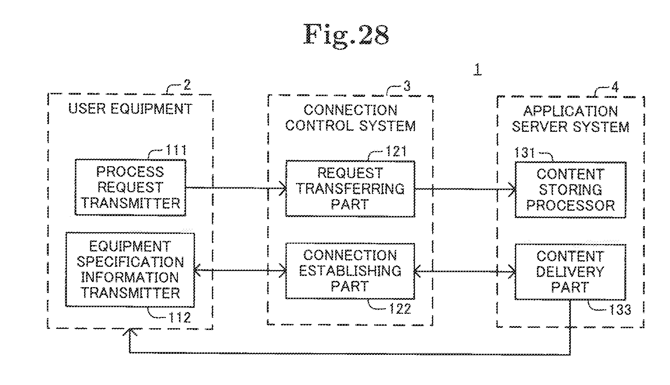

Next, a content delivery system according to an eighth exemplary embodiment of the present invention will be described with reference to Fig. 28.
The content delivery system 1 according to the eighth exemplary embodiment includes the user equipment 2, the application server system 4, and the connection control system 3.

The function of the user equipment 2 includes a process request transmitter 111 and an equipment specification information transmitter 112, The function of the connection control system 3 includes a request transferring part 121 and a connection establishing part 122. The function of the application server system 4 includes a content storing processor 131 and a content delivery part 132.

The equipment specification information transmitter 112 transmits equipment specification information, which is previously stored information for specifying equipment, to the connection control system 3.
The connection establishing part 122 receives equipment specification information transmitted by the user equipment 2, and establishes a connection between the application server system and the user equipment 2 based on the received equipment specification information.
The content delivery part 132 transmits content data representing content to the user equipment 2 with a connection established by the connection control system 2.

The process request transmitter 111 transmits user identification information, which is information for identifying the user of the user equipment, and a content storing process request as a process request of requesting the application server system 4 to execute a process for storing content data that includes content specification information for specifying content and represents the content, to the connection control system 3.

The request transferring part 121 receives the user identification information and content storing process request transmitted by the user equipment 2, and transmits the received user identification information and content storing process request to the application server system 4.

The content storing processor 131 receives the user identification information and content storing process request transmitted by the connection control system 3, and executes a process of causing the storing device to store the received user identification information and content data representing content specified with the received content storing process request in association with each other.

According to this eighth exemplary embodiment, the content delivery system 1 stores user identification information and content data in association with each other. Therefore, for example, it is possible to configure the application server system 4 so as to be capable of transmitting only content data stored in association with user identification information in the case of accepting a request for transmission of the content data. In this case, it is possible to prevent, content represented by content data stored by one user's request from being viewed by other users.

In this case, it is preferred that:
the user equipment is configured to transmit user authenticating information inputted by the user of the user equipment to the connection control system;
the connection control system is configured to receive the user authenticating information transmitted by the user equipment;
a user authenticating criterion information storing unit is comprised, the user authenticating criterion information storing unit being configured to previously store user authenticating criterion information;
a user authenticating unit is comprised, the user authenticating unit being configured to determine whether or not the user authenticating information received by the connection control system is corresponding to the user authenticating criterion information stored by the user authenticating criterion information storing unit, thereby determining whether or not the user identified with the received user identification information is a valid user; and
the application server system is configured to, in a case that the user authenticating unit authenticates the user identified with the received user identification information as a valid user, execute the process based on the user identification information and the content storing process request.

According to this, in a case that a user identified with user identification information is authenticated as a valid user, the application server system executes a process based on the user identification information and a content storing process request. Consequently, it is possible to prevent the application server system from executing a process based on a content storing process request transmitted by an invalid user. As a result, it is possible to more securely prevent content represented by content data stored in accordance with one user's request from being viewed by other users,

In this case, it is preferred that:
the user equipment is configured to transmit the user identification information as the information for identifying the user of the user equipment, and a stored content processing request of requesting the application server system to execute a process based on the stored content data, to the connection control system;
the connection control system is configured to receive the user identification information and the stored content processing request transmitted by the user equipment, and transmit the received user identification information and the stored content processing request to the application server system; and
the application server system is configured to receive the user identification information and the stored content processing request transmitted by the connection control system, and execute a process based on the user identification information and the stored content processing request having been received.

In this case, it is preferred that:
the stored content processing request is a content transmitting process request including the content specification information for specifying the content; and
the application server system is configured to, when receiving the content transmitting process request, execute a process of transmitting the content data to the user equipment in a case that the content data representing the content specified with the received content transmitting process request is stored in association with the received user identification information.

According to this, in a case that transmission of content data stored in association with received user identification information is requested, the content delivery system transmits the content data to user equipment having transmitted the user identification information. Consequently, it is possible to prevent content represented by content data stored in accordance with one user's request from being viewed by other users,

In this case, it is preferred that:
the stored content processing request is a content list transmitting process request; and
the application server system is configured to, when receiving the content list transmitting process request, execute a process of transmitting content list information representing a list of the content data stored in association with the received user identification information to the user equipment.

According to this, it is possible to prevent a list of content data stored in accordance with one user's request from being viewed by other users.

In this case, it is preferred that:
the stored content processing request is a content deleting process request including the content specification information for specifying the content; and
the application server system is configured to, when receiving the content deleting process request, execute a process of deleting the content data from the storing device in a case that the content data representing the content specified with the received content deleting process request is stored in association with the received user identification information.

According to this, it is possible to prevent content data stored in accordance with one user's request from being deleted by other users,

In this case, it is preferred that:
the stored content processing request is a content transmission stopping process request; and
the application server system is configured to, when receiving the content transmission stopping process request, execute a process of stopping transmission of content data in transit to the user equipment in a case that the content data is stored in association with the received user identification information.

In this case, it is preferred that:
the application server system is configured to receive the content data from outside and cause the storing device, to store the received content data;
the stored content processing request is a content storing stopping process request; and
the application server system is configured to, when receiving the content storing stopping process request, stop a process of causing the storing device to store the content data in a case that part of the content data is stored in association with the received user identification information,

In this case, it is preferred that:
the content, specification information includes storing start date and time to start, storing the content data, and storing finish date and time to finish storing the content data; and
the application server system is configured to, when receiving the content storing process request, cause the storing device to store schedule information including the storing start date and time and the storing finish date and time included in the received content storing process request in association with the received user identification information.

In this case, it is preferred that:
the user equipment is configured to transmit the user identification information, and a schedule list transmitting process request of requesting the application server system to execute a process based on the stored schedule information, to the connection control system;
the connection control system is configured to receive the user identification information and the schedule list transmitting process request transmitted by the user equipment, and transmit the user identification information and the schedule list transmitting process request having been received to the application server system; and
the application server system is configured to receive the user identification information and the schedule list transmitting process request transmitted by the connection control system, and execute a process of transmitting schedule list information representing a list of schedule information associated with the received user identification information among the stored schedule information to the user equipment.

In this case, it is preferred that:
the user equipment is configured to transmit the user identification information, and a schedule editing process request that includes schedule information specification information specifying the stored schedule information and edition matter information representing the matter of edition of the schedule information, to the connection control system;
the connection control system is configured to receive the user identification information and the schedule editing process request transmitted by the user equipment, and transmit the user identification information and the schedule editing process request having been received to the application server system; and
the application server system is configured to receive the user identification information and the schedule editing process request transmitted by the connection control system and, in a case that schedule information specified with the received schedule editing process request among the stored schedule information is associated with the received user identification information, execute a process of editing the schedule information based on the edition matter information included in the received schedule editing process request.

In this case, it is preferred that:
the application server system is configured to store sharing-user identification information for identifying a user who shares the stored content data, in association with the content data; and
the application server system is configured to, in a case that content data subjected to a process based on the received stored content processing request is stored in association with user identification information or sharing-user identification information that is identical to the received user identification information, execute the process.

According to this, when accepting a stored content processing request from a first user, even if content data subjected to a process based on the stored content processing request is data stored in accordance with a request by a second user, the content delivery system executes the process on the content data if it is set to share with the first user. As a result, for example, it is possible to make only the first and second users (specific users) view content represented by the content data stored by the second user. That is to say, it is possible to increase the convenience of the user.

Further, a content delivery system of another embodiment of the present invention includes user equipment, an application server system, and a connection control system. The user equipment is configured to transmit equipment specification information as previously stored information for specifying equipment to the connection control system. The connection control system includes a Core IMS (Internet Protocol Multimedia Subsystem) part configured to receive the equipment specification information transmitted by the user equipment and establish a connection between the application server system and the user equipment based on the received equipment specification information. The application server system includes: a media functions part configured to transmit content data representing content to the user equipment with the connection established by the connection control system; a service control functions part configured to control a service provided by the media functions part; and a user profile server functions part configured to store profile information of a user of the user equipment.

The user equipment is configured to further transmit user identification information as information for identifying the user of the user equipment, and a content storing process request as a process request of requesting the application server system to execute a process for storing content data that includes content specification information for specifying the content and represents the content, to the Core IMS part. The Core IMS part is configured to further receive the user identification information and the content storing process request transmitted by the user equipment, and transmit the user identification information and the content storing process request having been received to the application server system. The application server system is configured to receive the user identification information and the content storing process request transmitted by the Core IMS part. The media functions part is configured to store the content data. The service control functions part is configured to execute a process of causing the user profile server functions part to store the received user identification information, and content data identification information for identifying the content data representing the content specified with the received content storing process request among the content data stored by the media functions part, in association with each other.

In this case, it is preferred that:
the user equipment is configured to transmit user authenticating information inputted by the user of the user equipment to the Core IMS part;
the Core IMS part is configured to receive the user authenticating information transmitted by the user equipment;
the Core IMS part or the user profile server functions part is configured to previously store user authenticating criterion information;
the Core IMS part or the service control functions part is configured to determine whether or not the user authenticating information received by the Core IMS part is associated with the stored user authenticating criterion information, thereby determining whether or not the user identified with the received user identification information is a valid user; and
the service control functions part is configured to, when the user identified with the received user identification information is authenticated as a valid user, execute a process based on the user identification information and the content storing process request.

In this case, it is preferred that:
the service control functions part is configured to receive the user identification information and the content storing process request transmitted by the Core IMS part, and transmit a content storing process instruction to the Core IMS part in response to the received content storing process request;
the Core IMS part is configured to receive the content storing process instruction transmitted by the service control functions part, and transmit the received content storing process instruction to the media functions part;
the media functions part is configured to receive the content storing process instruction transmitted by the Core IMS part, and store content data representing content specified with the received content storing process instruction; and
the service control functions part is configured to cause the user profile server functions part to store the received user identification information, and content data identification information for identifying the content data representing the content specified with the received content storing process request among the content data stored by the media functions part, in association with each other.

Further, in another example of the content delivery system, it is preferred that:
the service control functions part is configured to receive the user identification information and the content storing process request transmitted by the Core ins part, and transmit, the received content storing process request as a content storing process instruction to the media functions part;
the media functions part is configured to receive the content storing process instruction transmitted by the service control functions part, and store content data representing content specified with the received content storing process instruction; and
the service control functions part is configured to cause the user profile server functions part to store the received user identification information, and content data identification information for identifying the content data representing the content specified with the received content storing process request among the content data stored by the media functions part, in association with each other.

Further, a content delivery method of another embodiment of the present invention includes:
transmitting equipment specification information as previously stored information for specifying equipment to a connection control system, by user equipment;
receiving the equipment specification information transmitted by the user equipment and establishing a connection between an application server system and the user equipment based on the received equipment specification information, by the connection control system;
transmitting content data representing content to the user equipment with the connection established by the connection control system, by the application server system;
further transmitting user identification information as information for identifying a user of the user equipment, and a content, storing process request that includes content specification information for specifying the content and that is a process request of requesting the application server system to execute a process for storing content data representing the content, to the connection control system, by the user equipment;
further receiving the user identification information and the content storing process request, transmitted by the user equipment, and transmitting the user identification information and the content storing process request having been received to the application server system, by the connection control system; and
further receiving the user identification information and the content storing process request transmitted by the connection control system, and causing a storing device to store the received user identification information and the content data representing the content specified with the received content storing process request in association with each other, by the application server system.

In this case, it is preferred that the content delivery method includes:
transmitting user authenticating information inputted by the user of the user equipment to the connection control system, by the user equipment;
receiving the user authenticating information transmitted by the user equipment, by the connection control system;
determining whether or not previously stored user authenticating criterion information and the user authenticating information received by the connection control system are associated with each other, thereby determining whether or not the user identified with the received user identification information is a valid user; and
executing the process based on the user identification information and the content storing process request in a case that the user identified with the received user identification information is authenticated as a valid user,

Further, an application server system of another exemplary embodiment of the present invention includes:
a content delivering unit configured to, when a connection with user equipment is established by a connection control system, transmit content data representing content to the user equipment; and
a content storing processing unit configured to receive user identification information for identifying a user of the user equipment, and a content storing process request as a process request of requesting for a process for storing content data that includes content specification information for specifying the content and represents the content, from the user equipment via the connection control system, and execute a process of causing a storing device to store, the received user identification information in association with content data representing content specified with the received content, storing process request.

In this case, it is preferred that the application server system includes a user authenticating unit configured to receive user authenticating information inputted by the user of the user equipment from the user equipment via the connection control system, and determining whether or not the received user authenticating information is associated with previously stored user authenticating criterion information, thereby determining whether or not a user identified with the received user identification information is a valid user, and the content storing processing unit is configured to, in a case that the user authenticating unit authenticates the user identified with the received user identification information as a valid user, execute the process based on the user identification information and the content storing process request.

Further, a computer program of another exemplary embodiment of the present invention includes instructions for causing an application server system to realize:
a content delivering unit configured to, when a connection with user equipment is established by a connection control system, transmit content data representing content to the user equipment; and
a content storing processing unit configured to receive user identification information for identifying a user of the user equipment, and a content storing process request as a process request of requesting for a process for storing content data that includes content specification for specifying the content and represents the content, from the user equipment via the connection control system, and execute a process of causing a storing device to store the received user identification information in association with content data representing content specified with the received content storing process request.

In this case, it is preferred that the computer program includes instructions for causing the application server system to further realize a user authenticating unit configured to receive user authenticating information inputted by the user of the user equipment from the user equipment via the connection control system, and determining whether or not the received user authenticating information is associated with previously stored user authenticating criterion information, thereby determining whether or not a user identified with the received user identification information is a valid user, and the content storing processing unit is configure to, when the user authenticating unit authenticates the user identified with the received user identification information as a valid user, execute the process based on the user identification information and the content storing process request.

Inventions of a content delivery method, an application server system, and a computer program have actions like those of the abovementioned content delivery system, and therefore, can achieve the object of the present invention mentioned above.

Although the present invention has been described with reference to the respective embodiments above, the present invention is not limited to the aforementioned embodiments. The configurations and details of the present invention can be altered in various manners that can be understood by those skilled in the art within the scope of the present invention.

For example, in the respective embodiments, a recording content table, a schedule table and a sharing user table are stored in association with equipment specification information and user identification information, but may be stored in association with user identification information alone. In this case, it is preferred that the authority confirming part 45 executes the authority confirming process based on the accepted user identification information, content data identification information, and process request specification information, not based on equipment specification information.

Further, a recording content table, a schedule table, a control user table and a sharing user tale may be stored in association with equipment specification information, user identification information and line identification information. Line identification information is information for identifying a communication line between the user equipment 2 and the connection control system 3, In this case, the authority confirming part 45 executes the authority confirming process based on the accepted user identification information, equipment specification information, line identification information, content data identification information, and process request specification information.

Further, modified examples of the respective embodiments may be provided with a server having both the functions of the service control server 4a and the media server 4b, instead of the service control server 4a and the media server 4b.

Further, in the respective embodiments, the media server 4b has the media control functions part 60 and the media delivery functions part 70, but a first server may have the media control functions part 60 and a second server may have the media delivery functions part 70.

Further, in modified examples of the respective embodiments, the application server system 4 may include the portal server 5. Moreover, the service control server 4a or the media server 4b may have a function of the portal server 5.

Further, modified examples of the respective embodiments may be provided with a plurality of servers each having the media delivery functions part 70.

Further, in the modified examples of the embodiments, the connection control system 3 includes a plurality of connection control servers (the connection control servers 3a, 3b, etc.), but may include only one connection control server.

In the respective embodiments, the user equipment 2 is a set top box, but may be a mobile phone, a PDA (personal data assistance), a smartphone, a PHS (personal handyphone system), a game machine, a car navigation device, a personal computer, or the like.
Moreover, in the respective embodiments, content is a moving image, but may by only an image or only sound.

A recording content table in the respective embodiments may be stored as information (action data) to be deleted in a case that a predetermined condition is satisfied (e.g., in a case that a preset time has elapsed, or in a case that content has become more than a preset capacity), or may be stored as information (user profile) to be edited (added, changed or deleted) only in accordance with an instruction by a controller or a user of the content delivery system 1. Also, a sharing user table in the respective embodiments may be stored as action data, or may be stored as user profile.

Further, in the respective embodiments, the components of the content delivery system are expressed as components that compose an IMS (IP Multimedia Subsystem), but may be expressed as components that compose an MMS (Multimedia Messaging Service).

The present invention is based upon and claims the benefit of priority from Japanese patent application No. 2008-231761, filed on September 10, 2008, the disclosure of which is incorporated herein in its entirety by reference.

The present invention can be applied to a video-on-demand system that delivers content via an IP network, an IPTV system that gives a TV broadcast via an IP network, and the like.

## Claims

1. A content delivery system comprising user equipment, an application server system, and a connection control system, wherein:
the user equipment is configured to transmit equipment specification information as previously stored information for specifying equipment, to the connection control system;
the connection control system is configured to receive the equipment specification information transmitted by the user equipment and establish a connection between the application server system and the user equipment based on the received equipment specification information;
the application server system is configured to transmit content data representing content to the user equipment with the connection established by the connection control system;
the user equipment is configured to further transmit user identification information as information for identifying a user of the user equipment, and a content storing process request that includes content specification information for specifying the content and that is a process request of requesting the application server system to execute a process for storing content data representing the content, to the connection control system;
the connection control system is configured to further receive the user identification information and the content storing process request transmitted by the user equipment, and transmit the received user identification information and the received content storing process request to the application server system; and
the application server system is configured to further receive the user identification information and the content storing process request transmitted by the connection control system, and execute a process of causing a storing device to store the received user identification information and content data representing content specified by the received content storing process request in association with each other.

2. The content delivery system according to Claim 1, wherein:
the user equipment is configured to transmit user authenticating information inputted by the user of the user equipment, to the connection control system;
the connection control system is configured to receive the user authenticating information transmitted by the user equipment; and
the content delivery system comprising:
a user authenticating criterion information storing means configured to previously store user authenticating criterion information; and
a user authenticating means configured to determine whether or not the user authenticating information received by the connection control, system is corresponding to the user authenticating criterion information stored by the user authenticating criterion information storing means, thereby determining whether or not the user identified by the received user identification information is a valid user, wherein:
the application server system is configured to, in a case that the user authenticating means authenticates the user identified by the received user identification information as a valid user, execute the process based on the user identification information and the content storing process request.

3. The content delivery system according to Claim 1 or 2, wherein:
the user equipment is configured to transmit the user identification information as information for identifying the user of the user equipment, and a stored content processing request of requesting the application server system to execute a process based on the stored content data, to the connection control system;
the connection control system is configured to receive the user identification information and the stored content processing request transmitted by the user equipment, and transmit the received user identification information and the received stored content processing request to the application server system; and
the application server system is configured to receive the user identification information and the stored content processing request transmitted by the connection control system, and execute a process based on the received user identification information and the received stored content processing request.

4. The content, delivery system according to Claim 3, wherein:
the stored content processing request is a content transmitting process request including the content specification information for specifying the content; and
the application server system is configured to, when receiving the content transmitting process request, execute the process of transmitting the content data to the user equipment in a case that the content data representing the content, specified by the received content transmitting process request is stored in association with the received user identification information.

5. The content delivery system according to Claim 3 or 4, wherein:
the stored content processing request is a content list transmitting process request; and
the application server system is configured to, when receiving the content list transmitting process request, execute the process of transmitting content list information representing a list of the content data stored in association with the received user identification information to the user equipment.

6. The content delivery system according to any of Claims 3 to 5, wherein:
the stored content processing request is a content deleting process request including the content specification information for specifying the content; and
the application server system is configured to, when receiving the content deleting process request, execute the process of deleting the content data from the storing device in a case that the content data representing the content specified by the received content, deleting process request is stored in association with the received user identification information.

7. The content delivery system according to any of Claims 3 to 6, wherein:
the stored content processing request is a content transmission stopping process request; and
the application server system is configured to, when receiving the content transmission stopping process request, execute the process of stopping transmission of the content data in transit to the user equipment in a case that the content data is stored in association with the received user identification information.

8. The content delivery system according to any of Claims 3 to 7, wherein:
the application server system is configured to receive the content data from outside and cause the storing device to store the received content data;
the stored content processing request is a content storing stopping process request; and
the application server system is configured to, when receiving the content storing stopping process request, stop the process of causing the storing device to store the content data in a case that part of the content data is stored in association with the received user identification information.

9. The content delivery system according to any of Claims 1 to 8, wherein:
the content specification information includes storing start date and time to start storing the content data, and storing finish date and time to finish storing the content data; and
the application server system is configured to, when receiving the content storing process request, cause the storing device to store schedule information including the storing start date and time and the storing finish date and time included in the received content storing process request in association with the received user identification information.

10. The content delivery system according to Claim 9, wherein:
the user equipment is configured to transmit the user identification information, and a schedule list transmitting process request of requesting the application server system to execute a process based on the stored schedule information; to the connection control system;
the connection control system is configured to receive, the user identification information and the schedule list transmitting process request transmitted by the user equipment, and transmit the received user identification information and the received schedule list transmitting process request to the application server system; and
the application server system is configured to receive the user identification information and the schedule list transmitting process request transmitted by the connection control system, and execute a process of transmitting schedule list information representing a list of schedule information associated with the received user identification information among the stored schedule information to the user equipment.

11. The content delivery system according to Claim 9 or 10, wherein::
the user equipment is configured to transmit the user identification information, and a schedule editing process request that includes schedule information specification information specifying the stored schedule information and edition matter information representing the matter of edition of the schedule information, to the connection control system;
the connection control system is configured to receive the user identification information and the schedule editing process request transmitted by the user equipment, and transmit the received user identification information and the received schedule editing process request to the application server system; and
the application server system is configured to receive the user identification information and the schedule editing process request transmitted by the connection control system and, in a case that schedule information specified by the received schedule editing process request among the stored schedule information is associated with the received user identification information, execute a process of editing the schedule information based on the edition matter information included in the received schedule editing process request.

12. The content delivery system according to any of Claims 1 to 11, wherein:
the application server system is configured to store sharing-user identification information for identifying a user who shares the stored content data, in association with the content data; and
the application server system is configured to, in a case that content data subjected to a process based on the received stored content processing request is stored in association with user identification information or sharing-user identification information that is identical to the received user identification information, execute the process.

13. A content delivery system comprising user equipment, an application server system, and a connection control system, wherein:
the user equipment is configured to transmit equipment specification information as previously stored information for specifying equipment to the connection control system;
the connection control system includes a Core IMS (Internet Protocol Multimedia Subsystem) part configured to receive the equipment specification information transmitted by the user equipment and establish a connection between the application server system and the user equipment based on the received equipment specification information;
the application server system includes:
a media functions part configured to transmit content data representing content to the user equipment with the connection established by the connection control system;
a service control functions part configured to control a service provided by the media functions part; and
a user profile server functions part configured to store profile information of a user of the user equipment;
the user equipment is configured to further transmit user identification information as information for identifying the user of the user equipment, and a content storing process request that includes content specification information for specifying the content and that is a process request of requesting the application server system to execute a process for storing content data representing the content, to the Core IMS part;
the Core IMS part is configured to further receive the user identification information and the content storing process request transmitted by the user equipment, and transmit the received user identification information and the received content storing process request to the application server system;
the application server system is configured to receive the user identification information and the content, storing process request transmitted by the Core IMS part;
the media functions part is configured to store the content data; and
the service control functions part is configured to execute a process of causing the user profile server functions part to store the received user identification information, and content data identification information for identifying the content data representing the content specified by the received content storing process request among the content data stored by the media functions part, in association with each other.

14. The content delivery system according to Claim 13, wherein:
the user equipment is configured to transmit user authenticating information inputted by the user of the user equipment to the Core IMS part;
the Core IMS part is configured to receive the user authenticating information transmitted by the user equipment;
the Core IMS part or the user profile server functions part is configured to previously store user authenticating criterion information;
the Core IMS part or the service control functions part is configured to determine whether or not the user authenticating information received by the Core IMS part is corresponding to the stored user authenticating criterion information, thereby determining whether or not the user identified by the received user identification information is a valid user; and
the service control functions part is configured to, when the user identified by the received user identification information is authenticated as a valid user, execute the process based on the user identification information and the content storing process request.

15. The content delivery system according to Claim 13 or 14, wherein:
the service control functions part is configured to receive the user identification information and the content storing process request transmitted by the Core IMS part, and transmit a content storing process instruction to the Core IMS part in response to the received content storing process request;
the Core IMS part is configured to receive the content storing process instruction transmitted by the service control functions part, and transmit the received content storing process instruction to the media functions part;
the media functions part is configured to receive the content storing process instruction transmitted by the Core IMS part, and store content data representing content specified by the received content storing process instruction; and
the service control functions part is configured to cause the user profile server functions part to store the received user identification information, and content data identification information for identifying the content data representing the content specified by the received content storing process request among the content data stored by the media functions part, in association with each other.

16. The content delivery system according to Claim 13 or 14, wherein:
the service control functions part is configured to receive the user identification information and the content storing process request transmitted by the Core IMS part, and transmit the received content storing process request as a content storing process instruction to the media functions part;
the media functions part is configured to receive the content storing process instruction transmitted by the service control functions part, and store content data representing content specified by the received content storing process instruction; and
the service control functions part is configured to cause the user profile server functions part to store the received user identification information, and content data identification information for identifying the content data representing the content specified by the received content storing process request among the content data stored by the media functions part, in association with each other.

17. A content delivery method, comprising:
transmitting equipment specification information as previously stored information for specifying equipment to a connection control system, by user equipment;
receiving the equipment specification information transmitted by the user equipment and establishing a connection between an application server system and the user equipment based on the received equipment specification information, by the connection control system;
transmitting content data representing content to the user equipment with the connection established by the connection control system, by the application server system;
further transmitting user identification information as information for identifying a user of the user equipment, and a content storing process request that includes content specification information for specifying the content and that is a process request of requesting the application server system to execute a process for storing content data representing the content, to the connection control system, by the user equipment;
further receiving the user identification information and the content storing process request transmitted by the user equipment, and transmitting the received user identification information and the received content storing process request to the application server system, by the connection control system; and
further receiving the user identification information and the content storing process request transmitted by the connection control system, and causing a storing device to store the received user identification information and content data representing the content specified by the received content storing process request in association with each other, by the application server system.

18. The content delivery method according to Claim 17, comprising:
transmitting user authenticating information inputted by the user of the user equipment to the connection control system, by the user equipment; and
receiving the user authenticating information transmitted by the user equipment, by the connection control system;
determining whether or not previously stored user authenticating criterion information and the user authenticating information received by the connection control system are corresponding to each other, thereby determining whether or not the user identified with the received user identification information is a valid user; and
executing the process based on the user identification information and the content storing process request in a case that the user identified with the received user identification information is authenticated as a valid user.

19. An application server system, comprising:
a content delivering means configured to, when a connection with user equipment is established by a connection control system, transmit content data representing content to the user equipment; and
a content storing processing means configured to receive user identification information for identifying a user of the user equipment, and a content storing process request that includes content specification information for specifying the content and that is a process request of requesting for a process for storing content data representing the content, from the user equipment via the connection control system, and execute a process of causing a storing device to store the received user identification information and content data representing the content specified by the received content storing process request in association with each other.

20. The application server system according to Claim 19, comprising:
a user authenticating means configured to receive user authenticating information inputted by the user of the user equipment from the user equipment via the connection control system, and determining whether or not the received user authenticating information is corresponding to previously stored user authenticating criterion information, thereby determining whether or not the user identified by the received user identification information is a valid user, wherein:
the content storing processing means is configured to, in a case that the user authenticating means authenticates the user identified by the received user identification information as a valid user, execute the process based on the user identification information and the content storing process request.

21. A computer program comprising instructions for causing an application server system to realize:
a content delivering means configured to, when a connection with user equipment is established by a connection control system, transmit content data representing content to the user equipment; and
a content storing processing means configured to receive user identification information for identifying a user of the user equipment, and a content storing process request that includes content specification information for specifying the content and that is a process request of requesting for a process for storing content data representing the content, from the user equipment via the connection control system, and execute a process of causing a storing device to store the received user identification information in association with content data representing content specified by the received content storing process request.

22. The computer program according to Claim 21, comprising instructions for causing the application server system to further realize:
a user authenticating means configured to receive user authenticating information inputted by the user of the user equipment from the user equipment via the connection control system, and determining whether or not the received user authenticating information is corresponding to previously stored user authenticating criterion information, thereby determining whether or not a user identified by the received user identification information is a valid user, wherein:
the content storing processing means is configured to, when the user authenticating means authenticates the user identified by the received user identification information as a valid user, execute the process based on the user identification information and the content storing process request.
